# EUROPEAN PATENT APPLICATION

(11) **EP 4 360 732 A1**
(43) Date of publication of application: **01.05.2024**
(21) Application number: 22849785.5
(22) Date of filing: 19.07.2022
(51) Int. Cl.: B01D 35/30, B01D 61/02, B01D 69/08, B01D 63/02, B01D 63/10, B01D 39/20, B01D 61/14, B01D 61/42, C02F 1/44

(54) **WATER PURIFIER HAVING COMPOSITE FILTER**

(30) Priority: 28.07.2021 KR 20210099137; 30.07.2021 KR 20210100595; 26.08.2021 KR 20210113094
(71) Applicant: Coway Co., Ltd., Gongju-si, Chungcheongnam-do 32508 (KR)
(72) Inventor: MOON, Tae Hun, Gongju-si, Chungcheongnam-do 32508 (KR); LEE, Jung Hun, Gongju-si, Chungcheongnam-do 32508 (KR); HAN, Doo Won, Gongju-si, Chungcheongnam-do 32508 (KR); YUN, Sung Han, Gongju-si, Chungcheongnam-do 32508 (KR); KANG, Woo Jin, Gongju-si, Chungcheongnam-do 32508 (KR); EOM, Ju Hyuk, Gongju-si, Chungcheongnam-do 32508 (KR); KIM, Keun Hwan, Gongju-si, Chungcheongnam-do 32508 (KR)
(74) Representative: BCKIP Part mbB
(86) International application number: PCT/KR2022/010534
(87) International publication number: WO 2023/008809

(57) **Abstract**

The present invention relates to a water purifier having a composite filter, wherein the water purifier is able to discharge residential water in addition to being able to take in raw water and output purified water, and is integrated with a reverse osmosis filter member (spiral filter member).

## Description

### CROSS-REFERENCE TO RELATED APPLICATION

This application claims priority to and the benefit of Korean Patent Application No. 10-2021-0099137, filed on July 28, 2021, Korean Patent Application No. 10-2021-0100595, filed on July 30, 2021, and Korean Patent Application No. 10-2021-0113094, filed on August 26, 2021, the disclosures of which are incorporated herein by reference in its entirety.

### [Technical Field]

The present invention relates to a water purifier having a composite filter, wherein the water purifier is able to discharge residential water in addition to being able to take in raw water and output purified water, and is integrated with a reverse osmosis filter member (spiral filter member).

### [Background Art]

In general, water purifiers are devices that filter introduced raw water into purified water that a user can drink, and provide it to the user. These water purifiers are used by combining several filters for raw water filtration, and when each filter is used in combination, the internal layout of the water purifiers becomes complicated, and the volume occupied by the filter inside increases, and thus, there has been a problem in that the volume of the entire water purifier is increased. Therefore, in order to solve this problem, a composite filter in which each filter is integrated is often used.

The composite filter for a water purifier disclosed in Korean Laid-Open Patent Publication No. 2003-0096867 of Woongjin Coway Co., Ltd. is provided with a composite filter for filtering raw water. The composite filter has a segment filter on the outer side, and on the inner side, it is provided with a first filter unit in which an ACF filter is overlapped, a second filter unit in which a plate-shaped ACF filter is disposed, and a third filter unit in which an AC filter and a UF filter are disposed. When the composite filter is manufactured, the composite filter is manufactured by sequentially stacking the first to third filter units inside the housing, and then fusing a cap. However, when configured in this way, there is a problem in that a lot of time is taken in the process of stacking each filter unit, and workability is deteriorated. In addition, since the inlet through which raw water is introduced is located at the lower part and the outlet through which purified water is output is located at the upper part, the tubes through which raw water and purified water flow are respectively disposed at the upper part and lower part of the composite filter, thereby making it difficult to install and replace the composite filter, and there is a problem in that space efficiency is reduced due to a complicated layout.

Korean Laid-Open Patent Publication No. 2009-0043783 of Woongjin Coway Co., Ltd. discloses a composite filter device for a water purifier. Such a composite filter device is manufactured by fusing a cap in a state where a membrane filter, a silver nano-filter and an activated carbon filter are sequentially stacked on the inside of a case. However, when configured in this way, there is a problem in that workability is deteriorated because a lot of time is taken in the process of stacking each filter. In addition, since the inlet through which raw water is obtained is located at the lower part and the outlet through which purified water is output is located at the upper part, the tubes through which raw water and purified water flow are respectively disposed at the upper part and lower part of the composite filter, respectively, thereby making it difficult to install and replace the composite filter, and there is a problem in that space efficiency is reduced due to a complicated layout.

The water purifier disclosed in Korean Laid-Open Patent Publication No. 2021-0040502 of Coway Co., Ltd. is provided with a composite filter for filtering raw water. The composite filter includes a first filter material and a second filter material, and each filter material may be selected from known filter materials such as a single filter element, for example, a sediment filter, a pre-carbon filter, a post-carbon filter, an antibacterial filter, various functional filters and the like. However, there is a problem in that such a composite filter cannot be used as a composite filter by integrating a reverse osmosis filter, because it does not have a flow path through which concentrated residential water discharged through the reverse osmosis filter flows.

Chinese Registered Utility Model Publication No. 212151806 of GUANGDONG SHUIHUDUN HEALTH TECH CO LTD discloses a conventional composite filter, and in this composite filter, the configuration in which a pre-treatment filter and a post-treatment filter are stacked inside an RO filter is disclosed. However, such a composite filter has a problem in that a RO filter with general structure (a structure in which a membrane is wound around a central tube) cannot be used, because the pre-treatment filter and the post-treatment filter are stacked inside the RO filter.

Chinese Registered Utility Model Publication No. 209307056 of MIDEA GROUP CO LTD discloses a conventional composite filter, and in this composite filter, a configuration in which a PAC filter and a carbon filter are stacked inside an RO filter is disclosed. However, even in the case of such a composite filter, since the PAC filter and the carbon filter are stacked inside the RO filter, there is a problem in that a RO filter with general structure (a structure in which a membrane is wound around a central tube) cannot be used.
(Patent Document 1) Korean Laid-Open Patent Publication No. 2003-0096867
(Patent Document 2) Korean Laid-Open Patent Publication No. 2009-0043783
(Patent Document 3) Korean Laid-Open Patent Publication No. 2021-0040502
(Patent Document 4) Chinese Registered Utility Model Publication No. 212151806
(Patent Document 5) Chinese Registered Utility Model Publication No. 209307056

### [Disclosure]

### [Technical Problem]

In order to solve the above problems, the water purifier having a composite filter according to an aspect of the present invention configures a composite filter by integrating a reverse osmosis filter member as it is possible to discharge residential water as well as introduce raw water and output purified water, and configures a composite filter in the manner of modularizing each filter through a first module including a filter member and a reverse osmosis filter member and a second module including a post-treatment filter member, wherein the first module and the second module are stacked, thereby improving manufacturability, and since 3 filter members are integrally provided in the housing unit, the miniaturization and replacement of the water purifier are easy, and additionally, raw water introduced from the upper part of the housing unit moves to the first module through the outside of the guide member, and thus, it is not mixed with purified water passing through the inside of the second module, thereby securing the operation stability of the water purifier, and moreover, by providing first to second partition walls to form independent flow paths in which raw water, purified water and residential water are not mixed in the head member of the housing unit, tubes through which raw water, purified water and residential water flow are concentrated on the upper part of the composite filter, and thus, it has an object to improve the degree of freedom in layout design of other parts.

In the water purifier having a composite filter according to an exemplary embodiment of the present invention, since residential water which is discharged to the outside of the first module flows through a residential water flow path provided between the guide upper cap and the guide lower cap, it does not mix with the raw water flowing outside of the guide member as well as the purified water flowing inside the second module, and thus, it has an object to improve the operational stability of the water purifier.

In the water purifier having a composite filter according to an exemplary embodiment of the present invention, the first partition wall is disposed to extend in the axial direction along the upward upper guide such that the discharged residential water is not mixed with the received raw water, and thus, it has an object to improve the operational stability of the water purifier.

In the water purifier having a composite filter according to an exemplary embodiment of the present invention, after the residential water is discharged to the outside of the first module, it flows through the residential water flow path provided in the guide member such that it does not mix with the purified water flowing inside the first and second modules, and thus, it has an object to improve the operational stability of the water purifier.

In the water purifier having a composite filter according to an exemplary embodiment of the present invention, since the guide upper cap is disposed to extend to the second upper cap member, raw water flowing toward the first module can be prevented from flowing into the guide upper cap, and it prevents residential water discharged to the outside of the first module from flowing to the outside of the guide upper cap, and thus, it has an object to improve the operational stability of the water purifier.

In the water purifier having a composite filter according to an exemplary embodiment of the present invention, a reverse osmosis filter member is disposed to be spirally wound around a central tube, and a second through-hole is formed such that the second purified water flows through the second purified water flow path provided therein, and accordingly, as the second purified water flow path is maintained stably, it is possible to secure operational reliability through the smooth flow of the second purified water, and the central tube is disposed to penetrate through the center of the guide lower cap, thereby allowing the second purified water to flow into the inside of the guide lower cap so as to prevent mixing with the discharged residential water, and thus, it has an object to improve the operational stability of the water purifier.

In the water purifier having a composite filter according to an exemplary embodiment of the present invention, the third lower cap member is disposed to be spaced apart at a certain distance from the upper surface of the guide lower cap, and the second purified water flow path is formed between the third lower cap member and the guide lower cap so as to configure the second purified water to flow smoothly, and thus, it has an object to improve the operational stability of the water purifier.

In the water purifier having a composite filter according to an exemplary embodiment of the present invention, the central tube is disposed to be inserted into a support surface which is formed to protrude upward from the third lower cap member such that the central tube can be stably fixed, thereby improving structural stability and allowing the second purified water to stably flow, and thus, it has an object to improve the operational stability of the water purifier.

In the water purifier having a composite filter according to an exemplary embodiment of the present invention, the flow direction of the second purified water introduced in the axial direction through the central tube is changed in the radial direction by a conversion surface such that the second purified water flows stably, and thus, it has an object to improve the operational stability of the water purifier.

In the water purifier having a composite filter according to an exemplary embodiment of the present invention, a first support protrusion which is formed to protrude outward on the radial direction outer side is provided on the periphery of the outer peripheral surface of the third lower cap member such that the third lower cap member supports the inner surface of the guide lower cap, and thus, it is possible to secure a second purified water flow path such that the second purified water flows through the periphery of the third lower cap member, and the first support protrusions are arranged at equal intervals such that the second purified water can move evenly in the peripheral direction of the third lower cap member, and thus, it has an object to improve the product reliability of the water purifier by improving the flow of the second purified water.

In the water purifier having a composite filter according to an exemplary embodiment of the present invention, since the second partition wall is arranged to extend in the axial direction along the third upward guide, it prevents the discharged third purified water from mixing with the discharged residential water, and thus, it has an object to improve the operational stability of the water purifier.

In the water purifier having a composite filter according to an exemplary embodiment of the present invention, it is possible to control the flow of raw water, purified water and residential water by controlling a valve unit through a control unit, and it effectively prevents the reverse flow of these fluids, and thus, it has an object to improve the operational stability of the water purifier.

In the water purifier having a composite filter according to another aspect of the present invention, since it is capable of discharging residential water as well as introducing raw water and outputting purified water, it configures a composite filter by integrating a reverse osmosis filter member, and a composite filter is configured in the manner of modularizing each filter through a first module including a pre-treatment filter member and a reverse osmosis filter member and a second module including with a post-treatment filter member, and stacking the first module and the second module, thereby improving manufacturability, and since three filter members are integrated into the housing unit, it is easy to miniaturize and replace the water purifier, and additionally, since the discharge tube member is disposed to penetrate through the center of the first module such that the third purified water generated from the second module disposed at the lower part is discharged to the outside, thereby preventing the third purified water from mixing with the second purified water so as to ensure the operational stability of the water purifier, and moreover, since the head member of the housing unit is provided with first and second partition walls to form independent flow paths in which raw water, purified water and residential water do not mix, tubes through which raw water, purified water and residential water flow are concentrated at the upper part of the composite filter, and thus, it has an object to improve the freedom of layout design in other parts.

In the water purifier having a composite filter according to another exemplary embodiment of the present invention, a reverse osmosis filter member is disposed to be wound in a spiral shape on the central tube, and a first through-hole is formed such that the second purified water flows into the second purified water flow path provided therein, and the discharge tube member which is penetrated and inserted through the center of the central tube is disposed to be spaced apart at a certain distance from the central tube, thereby stably maintaining the second water purification flow path, and thus, it has an obj ect to improve the operational reliability through the smooth flow of the second purified water.

In the water purifier having a composite filter according to another exemplary embodiment of the present invention, since the second partition wall is disposed to extend in the axial direction along the discharge tube member, it effectively prevents the discharged third purified water from being mixed with the discharged residential water, and thus, it has an object to improve the operational stability of the water purifier.

In the water purifier having a composite filter according to another exemplary embodiment of the present invention, since the discharged residential water is discharged to the outside through the residential water flow path formed between the first upward guide provided on the first upper cap member and the central tube, it does not mix with the raw water or the first purified water, and thus, it has an object to improve the operational stability of the water purifier.

In the water purifier having a composite filter according to another exemplary embodiment of the present invention, the first partition wall is disposed to extend in the axial direction along the first upward guide, thereby preventing the discharged residential water from being mixed with the received raw water, and thus, it has an object to improve the operational stability of the water purifier.

In the water purifier having a composite filter according to another exemplary embodiment of the present invention, the sub-assembly of the first module is possible through the second upper cap member and the second lower cap member, thereby improving workability, and it is possible to stably fix the first upper cap member, and thus, it has an object to improve the operational stability of the water purifier.

In the water purifier having a composite filter according to another exemplary embodiment of the present invention, structural stability is improved while the second upper cap member and the second lower cap member are stably connected through the connecting tube, and the first purified water flows smoothly through the second through-hole formed in the connection tube, and thus, it has an object to improve the operational stability of the water purifier.

In the water purifier having a composite filter according to another exemplary embodiment of the present invention, it is capable of sub-assembly of the second module through the third upper cap member and the third lower cap member, thereby improving workability, and since the discharge tube member is disposed to extend upward from the third upper cap member, the third purified flow path is stably formed in the process of stacking and arranging the first module and the second module, and thus, it has an object to improve the operational stability of the water purifier.

In the water purifier having a composite filter according to another exemplary embodiment of the present invention, since the third upper cap member is disposed to be spaced apart at a certain distance from the lower surface of the second lower cap member, a second purified water flow path is formed between the third upper cap member and the second lower cap member such that the second purified water flow smoothly, and thus, it has an object to improve the operational stability of the water purifier.

In the water purifier having a composite filter according to another exemplary embodiment of the present invention, it is configured to enable simply assembly in the manner of inserting the second module into the second downward lower guide formed on the second lower cap member to stack and arrange the first module and the second module, and thus, it has an object to improve the workability of the water purifier.

In the water purifier with a composite filter according to another exemplary embodiment of the present invention, since a first support protrusion which is formed to protrude outward on the radial direction outer side is provided on the periphery of the peripheral surface of the third upper cap member such that the third upper cap member supports the inner surface of the second downward lower guide, it is possible to secure a second purified water flow path such that the second purified water flows through the periphery of the third upper cap member, and the first support protrusions are arranged at equal intervals such that the second purified water can evenly move in the peripheral direction of the third upper cap member, and thus, it has an object to improve the product reliability by improving the flow of the second purified water.

In the water purifier having a composite filter according to another exemplary embodiment of the present invention, it is capable of sub-assembly of the second module through the third upper cap member and the third lower cap member, thereby improving workability, and since the discharge tube member is disposed to extend upward from the third lower cap member, the third purified water flow path is stably formed in the process of stacking and arranging the first module and the second module, and thus, it has an object to improve the operational stability of the water purifier.

In the water purifier having a composite filter according to another exemplary embodiment of the present invention, the third upward upper guide formed on the third upper cap member is disposed to be spaced apart at a certain distance from the discharge tube member such that a second purified water flow path is formed between the third upward upper guide and the discharge tube member, and the second purified water can smoothly flow, and thus, it has an object to improve the operational stability of the water purifier.

In the water purifier having a composite filter according to another exemplary embodiment of the present invention, an upward rib which is formed to extend upward from a connector body is coupled to the central tube in a state where the connector body of the connector member is press-fitted and fixed to the inside of the second lower cap member, and the first module and the second module are simply combined in the manner of coupling a downward rib which is formed to extend downward from the connector body to the third upward upper guide, and thus, it has an object to improve workability.

The water purifier having a composite filter according to another exemplary embodiment of the present invention is provided with a cover lower cap that surrounds the outside of the second module, thereby preventing the mixing of raw water and the second purified water, and such a cover lower cap is configured to be easily assembled by coupling to a second downward lower guide which is formed on the second lower cap member, and thus, it has an object to improve workability.

In the water purifier having a composite filter according to another exemplary embodiment of the present invention, a second support protrusion which is formed to protrude outward on the radial direction outer side is provided on the periphery of the outer peripheral surface of the third lower cap member such that the third lower cap member supports the inner surface of the cover lower cap, and thus, it is possible to secure a third purified water flow path such that the third purified water flows through the periphery of the third lower cap member, and the second support protrusions are arranged at equal intervals such that the third purified water can evenly move in the peripheral direction of the third lower cap member, and thus, it has an object to improve product reliability by improving the flow of the third purified water.

The water purifier having a composite filter according to another exemplary embodiment of the present invention can control the flow of raw water, purified water and residential water by controlling the valve unit through the control unit, and by effectively preventing the reverse flow of these fluids, it has an object to improve product reliability.

The water purifier having a composite filter according to still another aspect of the present invention is capable of discharging residential water as well as introducing raw water and outputting third purified water, and thus, user convenience is improved by integrating a spiral-wound filter member to form a composite filter, and the head member of the housing unit is provided with first and second partition walls so as to form independent flow paths in which raw water, third purified water and residential water do not mix such that tubes through which the raw water, third purified water and residential water flow are concentrated on the upper part of the composite filter, and thus, it is possible to improve the degree of freedom in the layout design of other parts, and additionally, in the filtration unit, a pre-treatment filter member and a post-treatment filter member are arranged to be stacked through a first upper cap member and a second upper cap member, and a spiral-wound filter member is disposed on the radial direction inner side of such filter members such that it is configured to manufacture a composite filter by utilizing a pre-manufactured spiral-wound filter member, and thus, it has an object to improve manufacturability.

In the water purifier having a composite filter according to still another exemplary embodiment of the present invention, the filtration unit is provided with a second lower cap member for fixing the post-treatment filter member and the spiral-wound filter member to improve structural stability, and a connecting pipe member is provided on the radial direction inner side of the spiral-wound filter member to prevent the discharged third purified water from mixing with the second purified water, and thus, it has an object to improve user satisfaction by enhancing the water quality of the finally discharged third purified water.

In the water purifier having a composite filter according to still another exemplary embodiment of the present invention, the second lower cap member and the connecting pipe member are stably coupled by the pipe support guide to improve structural stability, and the discharged third purified water can stably flow, and thus, it has an object to improve the operational stability of the water purifier.

In the water purifier having a composite filter according to another exemplary embodiment of the present invention, a spiral-wound filter member is disposed to be spirally disposed around the central tube, and a second purified water through-hole is formed such that the second purified water flows into the second purified water flow path provided therein, and the connecting pipe member inserted to penetrate through the center of the central tube is disposed to be spaced apart at a certain distance from the central tube, thereby stably maintaining the second purified water flow path, and thus, it has an object to improve the operational reliability of the water purifier through the smooth flow of the second purified water..

In the water purifier having a composite filter according to still another exemplary embodiment of the present invention, the central tube is disposed to penetrate through the third lower cap member in a state where the third lower cap member is disposed at the lower part the spiral-wound filter member such that even if the first purified water flows through the upper part of the third lower cap member, it does not mix with the second purified water flowing through the lower part of the third lower cap member, and thus, it has an object to improve user satisfaction by preventing the deterioration of the water quality of the second purified water and improving the water quality of the third purified water that is finally discharged.

In the water purifier having a composite filter according to still another exemplary embodiment of the present invention, since the central tube is disposed to penetrate through the second through-hole formed in the third lower cap member, the penetrating state of the central tube is stably maintained, thereby improving structural stability, and the second purified water moves smoothly to the lower part of the third lower cap member through the penetrating part of the central tube, and thus, it has an object to improve the operational reliability of the water purifier.

In the water purifier having a composite filter according to still another exemplary embodiment of the present invention, since the third upward support guide is disposed between the spiral-wound filter member and the post-treatment filter member, it has an object to improve user satisfaction by preventing the deterioration of the water quality of the second purified water and enhancing the water quality of the third purified water that is finally discharged.

In the water purifier having a composite filter according to still another exemplary embodiment of the present invention, a second upward support guide is formed such that the post-treatment filter member is fixedly disposed, and thus, it has an object to improve the structural reliability of the composite filter.

In the water purifier having a composite filter according to still another exemplary embodiment of the present invention, since the second downward guide supports the lower surface of the fourth lower cap member, the separation state between the second lower cap member and the lower surface of the fourth lower cap member is stably maintained and the third purified water which moves to the lower part of the second lower cap member moves smoothly through the third through-hole formed in the second downward guide, and thus, it has an object to improve the operational stability of the water purifier.

In the water purifier having a composite filter according to still another exemplary embodiment of the present invention, a spiral-wound filter member is stably fixed through the third upper cap member, and thus, it has an object to improve the structural stability of the composite filter.

In the water purifier having a composite filter according to still another exemplary embodiment of the present invention, since the residential water that has moved to the upper end of the spiral-wound filter member is discharged to the outside after moving through the third upward guide, the discharge of the residential water is stably performed, and thus, it has an object to improve the operational stability of the water purifier.

In the water purifier having a composite filter according to still another exemplary embodiment of the present invention, the first partition wall is disposed to extend in the axial direction along the third upward guide, thereby effectively preventing the discharged residential water from being mixed with the incoming raw water, and thus, it has an object to improve user satisfaction by enhancing the water quality of the third purified water that is finally discharged.

In the water purifier having a composite filter according to still another exemplary embodiment of the present invention, the second partition wall is disposed to extend in the axial direction along the connecting pipe member, thereby effectively preventing the discharged third purified water from being mixed with the discharged residential water, and thus, it has an object to improve user satisfaction by enhancing the water quality of the third purified water that is finally discharged.

In the water purifier having a composite filter according to still another exemplary embodiment of the present invention, the pre-treatment filter member can be fixed in the manner of respectively arranging the first upper cap member and the first lower cap member on the upper part and lower part of the pre-treatment filter member such that the modularization of the composite filter is possible through the sub-assembly process, thereby improving workability, and since the first lower cap member is arranged to be stacked with the second upper cap member, the stacking state of the pre-treatment filter member and the post-treatment filter member are stably maintained, and thus, it has an object to improve the structural stability of the composite filter.

In the water purifier having a composite filter according to still another exemplary embodiment of the present invention, the structural stability of the composite filter is improved while the first upper cap member and the first lower cap member are stably connected through the first connecting tube, and the raw water flows smoothly through the raw water through-hole formed in the first connection tube, and thus, it has an object to improve the operational stability of the water purifier.

In the water purifier having a composite filter according to still another exemplary embodiment of the present invention, the structural stability is improved while the first upper cap member and the first lower cap member are stably connected through the second connecting tube, and the first purified water flows smoothly through the first purified water through-hole formed in the second connection tube, and thus, it has an object to improve the operational stability of the water purifier.

In the water purifier having a composite filter according to still another exemplary embodiment of the present invention, since the fourth lower cap member is disposed to be spaced apart from the lower surface of the second lower cap member, the third purified water flows smoothly, and the fourth upward support guide is arranged to simultaneously surround the second upper cap member and the second lower cap member, thereby preventing arbitrary outflow of third purified water and arbitrary inflow of raw water, and thus, it has an object to improve the operational stability of the water purifier.

The water purifier having a composite filter according to still another exemplary embodiment of the present invention can control the flow of raw water, third purified water and residential water by controlling the valve unit through the control unit, and it effectively prevents the reverse flow of these fluids, and thus, it has an object to improve the product reliability.

### [Technical Solution]

In order to achieve the above objects, the water purifier having a composite filter according to an aspect of the present invention includes a housing unit which is provided with a raw water intake port through which raw water is introduced, a purified water output port through which filtered purified water is output, and a residential water discharge port through which residential water generated during a filtration process is discharged; and a filtration unit which is disposed inside the housing unit and is provided with a pre-treatment filter member for filtering the raw water to generate first purified water, a reverse osmosis filter member for filtering the first purified water to generate second purified water, and a post-treatment filter member for filtering the second purified water to generate third purified water, wherein the housing unit includes a head member which is provided with a first partition wall for preventing the raw water and the residential water from mixing and a second partition wall for preventing the residential water and the purified water from mixing, and a body member which extends from the head member and in which the filtration unit is disposed therein, wherein the filtration unit includes a first module in which the pre-treatment filter member and the reverse osmosis filter member are sequentially provided therein, a second module which is disposed at an upper part of the first module and in which the post-treatment filter member is provided therein, and a guide member which is arranged to surround the outside of the second module such that the raw water introduced through an upper part of the housing unit moves to the first module while bypassing the second module, and wherein a residential water flow path through which the residential water discharged to the outside of the first module moves is provided inside the guide member.

In the water purifier having a composite filter according to an exemplary embodiment of the present invention, the guide member may include a guide lower cap which is arranged to surround the second module, and a guide upper cap which is disposed outside the guide lower cap, and wherein the residential water flow path through which the residential water discharged to the outside of the first module flows is provided between the guide lower cap and the guide upper cap.

In the water purifier having a composite filter according to an exemplary embodiment of the present invention, the guide upper cap may include an upward upper guide which extends upward so as to form the residential water flow path, and wherein the first partition wall is arranged to extend in the axial direction along the upward upper guide.

In the water purifier having a composite filter according to an exemplary embodiment of the present invention, the first module may include a first upper cap member in which the reverse osmosis filter member is fixedly disposed at a lower part and is provided with a first through-hole such that the residential water is discharged to the outside of the first module.

In the water purifier having a composite filter according to an exemplary embodiment of the present invention, the first module may include a second upper cap member in which the pre-treatment filter member is fixedly disposed at a lower part, and through which the reverse osmosis filter member is disposed to penetrate at the same time, and wherein the guide upper cap is arranged to extend up to the second upper cap member.

In the water purifier having a composite filter according to an exemplary embodiment of the present invention, the first module may include a central tube which supports the reverse osmosis filter member to be wound in a spiral shape, and in which a second through-hole is formed so as to allow the second purified water to flow therein, and wherein the central tube is disposed to penetrate through the center of the guide lower cap such that the second purified water flows toward the second module.

In the water purifier having a composite filter according to an exemplary embodiment of the present invention, the second module may include a third upper cap member and a third lower cap member on which the post-treatment filter member is fixedly disposed, and wherein the third lower cap member is disposed to be spaced apart at a certain distance from an upper surface of the guide lower cap such that the second purified flow path is formed to extend to the periphery of the third lower cap member.

In the water purifier having a composite filter according to an exemplary embodiment of the present invention, an upwardly protruding support surface may be formed in the center of the third lower cap member such that the central tube is inserted and disposed therein.

In the water purifier having a composite filter according to an exemplary embodiment of the present invention, at the upper end of the support surface, a switching surface is provided to change the flow direction of the second purified water such that the second purified water flowing in the axial direction through the central tube flows in the radial direction.

In the water purifier having a composite filter according to an exemplary embodiment of the present invention, the third lower cap member may include at least two first support protrusions which are formed to protrude outward in the radial direction around the periphery of the outer surface, and wherein the first support protrusions are disposed to be spaced apart from each other at equal intervals.

In the water purifier having a composite filter according to an exemplary embodiment of the present invention, the third upper cap member may include a third upward guide which extends upward so as to form a third purified water flow path, and wherein the second partition wall is arranged to extend in the axial direction along the third upward guide.

The water purifier having a composite filter according to an exemplary embodiment of the present invention may further include a valve unit for regulating the flow of the raw water, the purified water and the residential water, and a control unit for controlling the operation of the valve unit.

The water purifier having a composite filter according to another aspect of the present invention may include a housing unit which is provided with a raw water intake port through which raw water is introduced, a purified water output port through which filtered purified water is output, and a residential water discharge port through which residential water generated during a filtration process is discharged; and a filtration unit which is disposed inside the housing unit and is provided with a pre-treatment filter member for filtering the raw water to generate first purified water, a reverse osmosis filter member for filtering the first purified water to generate second purified water, and a post-treatment filter member for filtering the second purified water to generate third purified water, wherein the housing unit includes a head member which is provided with a first partition wall for preventing the raw water and the residential water from mixing and a second partition wall for preventing the residential water and the purified water from mixing, and a body member which extends from the head member and in which the filtration unit is disposed therein, wherein the filtration unit includes a first module in which the pre-treatment filter member and the reverse osmosis filter member are sequentially provided therein, and a second module which is disposed at a lower part of the first module and in which the post-treatment filter member is provided therein, and wherein the second module includes a discharge tube member which is disposed to penetrate through the center of the first module such that the third purified water is output to the outside.

In the water purifier having a composite filter according to another exemplary embodiment of the present invention, the first module may include a central tube which supports the reverse osmosis filter member to be wound in a spiral shape, and in which a first through-hole is formed to allow the second purified water to flow therein, and wherein the discharge tube member is disposed to penetrate through the center of the central tube, and is disposed to be spaced apart at a certain distance such that a second purified water flow path through which second purified water flows is formed between the central tube and the discharge tube member.

In the water purifier having a composite filter according to another exemplary embodiment of the present invention, the second partition wall may be arranged to extend in the axial direction along the discharge tube member.

In the water purifier having a composite filter according to another exemplary embodiment of the present invention, the first module may include a first upper cap member in which the reverse osmosis filter member is disposed at a lower part, and wherein the first upper cap member includes a first upward guide which is disposed to be spaced apart at a certain distance from the central tube so as to form a residential water flow path through which the residential water is discharged.

In the water purifier having a composite filter according to another exemplary embodiment of the present invention, the first partition wall may be arranged to extend in the axial direction along the first upward guide.

In the water purifier having a composite filter according to another exemplary embodiment of the present invention, the first module may include a second upper cap member and a second lower cap member on which the pre-treatment filter member is fixedly disposed, and wherein the first upward guide is disposed to penetrate the second upper cap member.

In the water purifier having a composite filter according to another exemplary embodiment of the present invention, a connecting tube may be provided to connect the second upper cap member and the second lower cap member, and wherein a second through-hole through which the first purified water flows is formed in the connecting tube.

In the water purifier having a composite filter according to another exemplary embodiment of the present invention, the second module may include a third upper cap member and a third lower cap member on which the post-treatment filter member is fixedly disposed, and wherein the discharge tube member is disposed to extend upward from the third upper cap member.

In the water purifier having a composite filter according to another exemplary embodiment of the present invention, the third upper cap member may be disposed to be spaced apart at a certain distance from a lower surface of the second lower cap member such that the second purified water flow path is formed to extend to the periphery of the third upper cap member.

In the water purifier having a composite filter according to another exemplary embodiment of the present invention, the second lower cap member may include a second downward lower guide which is arranged to surround the outside of the second module.

In the water purifier having a composite filter according to another exemplary embodiment of the present invention, the third upper cap member may include at least two first support protrusions which are formed to protrude outward in the radial direction around the periphery of the outer surface, and wherein the first support protrusions are disposed to be spaced apart from each other at equal intervals.

In the water purifier having a composite filter according to another exemplary embodiment of the present invention, the second module may include a third upper cap member and a third lower cap member on which the post-treatment filter member is fixedly disposed, and wherein the discharge tube member is disposed to extend upward from the third lower cap member.

In the water purifier having a composite filter according to another exemplary embodiment of the present invention, the discharge tube member may be disposed to penetrate the third upper cap member, and wherein the third upper cap member includes a third upward upper guide which is disposed to be spaced apart at certain distance from the discharge tube member so as to form the second purified water flow path.

The water purifier having a composite filter according to another exemplary embodiment of the present invention may be provided with a connector member in which the first module and the second module are coupled to each other, and wherein the connector member includes a connector body which is press-fitted into the second lower cap member, an upward rib which is formed to extend upward from the connector body so as to engage the central tube, and a downward rib which is formed to extend downward from the connector body so as to engage the third upward upper guide.

The water purifier having a composite filter according to another exemplary embodiment of the present invention may be provided with a cover lower cap which surrounds the outside of the second module, and wherein the cover lower cap is coupled to the second downward lower guide.

In the water purifier having a composite filter according to another exemplary embodiment of the present invention, the third lower cap member may include at least two second support protrusions which are formed to protrude outward in the radial direction around the outer peripheral surface, and wherein the second support protrusions are disposed to be spaced apart from each other at equal intervals.

The water purifier having a composite filter according to another exemplary embodiment of the present invention may further include a valve unit for regulating the flow of the raw water, the purified water and the residential water, and a control unit for controlling the operation of the valve unit.

The water purifier having a composite filter according to still another aspect of the present invention may include a housing unit which is provided with a raw water intake port through which raw water is introduced, a purified water output port through which filtered purified water is output, and a residential water discharge port through which residential water generated during a filtration process is discharged; and a filtration unit which is provided with a pre-treatment filter member for filtering the raw water to generate first purified water, a spiral-wound filter member for filtering the first purified water to generate second purified water, and a post-treatment filter member which filters the second purified water to generate third purified water and is arranged to be stacked at a lower part of the pre-treatment filter member, wherein the housing unit includes a head member which is provided with a first partition wall for preventing the raw water and the residential water from mixing and a second partition wall for preventing the third purified water and the residential water from mixing, and a body member which extends from the head member and in which the filtration unit is disposed therein, and wherein the filtration unit includes a first upper cap member in which the pre-treatment filter member disposed on the radial direction outer side and the spiral-wound filter member disposed on the radial direction inner side are disposed at a lower part, and a second upper cap member in which the post-treatment filter member disposed on the radial direction outer side is disposed at a lower part, and the spiral-wound filter member disposed on the radial direction inner side is disposed to penetrate.

In the water purifier having a composite filter according to still another exemplary embodiment of the present invention, the filtration unit may include a second lower cap member in which the post-treatment filter member and the spiral-wound filter member are fixedly disposed at an upper part, and a connecting pipe member which is disposed on the radial direction inner side of the spiral-wound filter member to prevent the second purified water and the third purified water from mixing.

In the water purifier having a composite filter according to still another exemplary embodiment of the present invention, the second lower cap member may include a pipe support guide which is arranged to extend upward so as to be coupled to the connecting pipe member.

In the water purifier having a composite filter according to still another exemplary embodiment of the present invention, the spiral-wound filter member may include a central tube which supports the spiral-wound filter member to be wound in a spiral shape, and in which a second purified water through-hole is formed to allow the second purified water to flow therein, and wherein the connecting pipe member is disposed to penetrate through the center of the central tube, and is disposed to be spaced apart at a certain distance such that a second purified water flow path through which the second purified water flows is formed between the central tube and the connecting pipe member.

In the water purifier having a composite filter according to still another exemplary embodiment of the present invention, the filtration unit may be disposed at a lower part of the spiral-wound filter member, and include a third lower cap member through which the central tube is disposed to penetrate such that the second purified water moves downward.

In the water purifier having a composite filter according to still another exemplary embodiment of the present invention, the third lower cap member may include a second-through hole through which the central tube is disposed to penetrate.

In the water purifier having a composite filter according to still another exemplary embodiment of the present invention, the third lower cap member may include a third upward support guide which is disposed to extend upward so as to be disposed between the spiral-wound filter member and the post-treatment filter member.

In the water purifier having a composite filter according to still another exemplary embodiment of the present invention, the second lower cap member may include a second upward support guide which is arranged to extend upward such that the post-treatment filter member is fixedly disposed.

In the water purifier having a composite filter according to still another exemplary embodiment of the present invention, the second lower cap member may include a second downward guide which is formed to extend downward, and wherein the second downward guide includes a third through-hole through which the third purified water flows to a lower part of the second lower cap member.

In the water purifier having a composite filter according to still another exemplary embodiment of the present invention, the filtration unit may include a third upper cap member which is arranged to be stacked with the first upper cap member such that the spiral-wound filter member is fixedly disposed at a lower part.

In the water purifier having a composite filter according to still another exemplary embodiment of the present invention, the third upper cap member may include a third upward guide which is arranged to extend upward such that the residential water which has moved to the upper end of the spiral-wound filter member is discharged to the outside.

In the water purifier having a composite filter according to still another exemplary embodiment of the present invention, the first partition wall may be arranged to extend in the axial direction along the third upward guide.

In the water purifier having a composite filter according to still another exemplary embodiment of the present invention, the second partition wall may be arranged to extend in the axial direction along the connecting pipe member.

In the water purifier having a composite filter according to still another exemplary embodiment of the present invention, the filtration unit may include a first lower cap member which is arranged to be stacked with the second upper cap member such that the pre-treatment filter member is fixedly disposed at an upper part.

In the water purifier having a composite filter according to still another exemplary embodiment of the present invention, a first connecting tube may be provided on the radial direction outer side so as to connect the first upper cap member and the first lower cap member, and wherein a raw water through-hole through which the raw water flows is formed in the first connecting tube.

In the water purifier having a composite filter according to still another exemplary embodiment of the present invention, a second connecting tube may be provided on the radial direction inner side so as to connect the first upper cap member and the first lower cap member, and wherein a first through-hole through which the first purified water flows is formed in the second connecting tube.

In the water purifier having a composite filter according to still another exemplary embodiment of the present invention, the filtration unit may include a fourth lower cap member which supports the second lower cap member to be disposed to be spaced apart from an upper surface, and wherein the fourth lower cap member includes a fourth upward support guide which is arranged to extend upward so as to simultaneously surround the second upper cap member and the second lower cap member.

The water purifier having a composite filter according to still another exemplary embodiment of the present invention may further include a valve unit for regulating the flow of the raw water, the purified water and the residential water, and a control unit for controlling the operation of the valve unit.

### [Advantageous Effects]

According to the above configurations, the water purifier having a composite filter according to an aspect of the present invention configures a composite filter by integrating a reverse osmosis filter member as it is possible to discharge residential water as well as introduce raw water and output purified water, and configures a composite filter in the manner of modularizing each filter through a first module including a filter member and a reverse osmosis filter member and a second module including a post-treatment filter member, wherein the first module and the second module are stacked, thereby improving manufacturability, and since 3 filter members are integrally provided in the housing unit, the miniaturization and replacement of the water purifier are easy, and additionally, raw water introduced from the upper part of the housing unit moves to the first module through the outside of the guide member, and thus, it is not mixed with purified water passing through the inside of the second module, thereby securing the operation stability of the water purifier, and moreover, by providing first to second partition walls to form independent flow paths in which raw water, purified water and residential water are not mixed in the head member of the housing unit, tubes through which raw water, purified water and residential water flow are concentrated on the upper part of the composite filter, and thus, it provides an effect of improving the degree of freedom in layout design of other parts.

In the water purifier having a composite filter according to an exemplary embodiment of the present invention, since residential water which is discharged to the outside of the first module flows through a residential water flow path provided between the guide upper cap and the guide lower cap, it does not mix with the raw water flowing outside of the guide member as well as the purified water flowing inside the second module, and thus, it provides an effect of improving the operational stability of the water purifier.

In the water purifier having a composite filter according to an exemplary embodiment of the present invention, the first partition wall is disposed to extend in the axial direction along the upward upper guide such that the discharged residential water is not mixed with the introduced raw water, and thus, it provides an effect of improving the operational stability of the water purifier.

In the water purifier having a composite filter according to an exemplary embodiment of the present invention, after the residential water is discharged to the outside of the first module, it flows through the residential water flow path provided in the guide member such that it does not mix with the purified water flowing inside the first and second modules, and thus, it provides an effect of improving the operational stability of the water purifier.

In the water purifier having a composite filter according to an exemplary embodiment of the present invention, since the guide upper cap is disposed to extend to the second upper cap member, raw water flowing toward the first module can be prevented from flowing into the guide upper cap, and it prevents residential water discharged to the outside of the first module from flowing to the outside of the guide upper cap, and thus, it provides an effect of improving the operational stability of the water purifier.

In the water purifier having a composite filter according to an exemplary embodiment of the present invention, a reverse osmosis filter member is disposed to be spirally wound around a central tube, and a second through-hole is formed such that the second purified water flows through the second purified water flow path provided therein, and accordingly, as the second purified water flow path is maintained stably, it is possible to secure operational reliability through the smooth flow of the second purified water, and the central tube is disposed to penetrate through the center of the guide lower cap, thereby allowing the second purified water to flow into the inside of the guide lower cap so as to prevent mixing with the discharged residential water, and thus, it provides an effect of improving the operational stability of the water purifier.

In the water purifier having a composite filter according to an exemplary embodiment of the present invention, the third lower cap member is disposed to be spaced apart at a certain distance from the upper surface of the guide lower cap, and the second purified water flow path is formed between the third lower cap member and the guide lower cap so as to configure the second purified water to flow smoothly, and thus, it provides an effect of improving the operational stability of the water purifier.

In the water purifier having a composite filter according to an exemplary embodiment of the present invention, the central tube is disposed to be inserted into a support surface which is formed to protrude upward from the third lower cap member such that the central tube can be stably fixed, thereby improving structural stability and allowing the second purified water to stably flow, and thus, it provides an effect of improving the operational stability of the water purifier.

In the water purifier having a composite filter according to an exemplary embodiment of the present invention, the flow direction of the second purified water introduced in the axial direction through the central tube is changed in the radial direction by a conversion surface such that the second purified water flows stably, and thus, it provides an effect of improving the operational stability of the water purifier.

In the water purifier having a composite filter according to an exemplary embodiment of the present invention, a first support protrusion which is formed to protrude outward on the radial direction outer side is provided on the periphery of the outer peripheral surface of the third lower cap member such that the third lower cap member supports the inner surface of the guide lower cap, and thus, it is possible to secure a second purified water flow path such that the second purified water flows through the periphery of the third lower cap member, and the first support protrusions are arranged at equal intervals such that the second purified water can move evenly in the peripheral direction of the third lower cap member, and thus, it provides an effect of improving the product reliability of the water purifier by improving the flow of the second purified water.

In the water purifier having a composite filter according to an exemplary embodiment of the present invention, since the second partition wall is arranged to extend in the axial direction along the third upward guide, it prevents the output third purified water from mixing with the discharged residential water, and thus, it provides an effect of improving the operational stability of the water purifier.

In the water purifier having a composite filter according to an exemplary embodiment of the present invention, it is possible to control the flow of raw water, purified water and residential water by controlling a valve unit through a control unit, and it effectively prevents the reverse flow of these fluids, and thus, it provides an effect of improving the operational stability of the water purifier.

In the water purifier having a composite filter according to another aspect of the present invention, since it is capable of discharging residential water as well as introducing raw water and outputting purified water, it configures a composite filter by integrating a reverse osmosis filter member, and a composite filter is configured in the manner of modularizing each filter through a first module including a pre-treatment filter member and a reverse osmosis filter member and a second module including with a post-treatment filter member, and stacking the first module and the second module, thereby improving manufacturability, and since 3 filter members are integrated into the housing unit, it is easy to miniaturize and replace the water purifier, and additionally, since the discharge tube member is disposed to penetrate through the center of the first module such that the third purified water generated from the second module disposed at the lower part is discharged to the outside, thereby preventing the third purified water from mixing with the second purified water so as to ensure the operational stability of the water purifier, and moreover, since the head member of the housing unit is provided with first and second partition walls to form independent flow paths in which raw water, purified water and residential water do not mix, tubes through which raw water, purified water and residential water flow are concentrated at the upper part of the composite filter, and thus, it provides an effect of improving the freedom of layout design in other parts.

In the water purifier having a composite filter according to another exemplary embodiment of the present invention, a reverse osmosis filter member is disposed to be wound in a spiral shape on the central tube, and a first through-hole is formed such that the second purified water flows into the second purified water flow path provided therein, and the discharge tube member which is penetrated and inserted through the center of the central tube is disposed to be spaced apart at a certain distance from the central tube, thereby stably maintaining the second water purification flow path, and thus, it provides an effect of improving the operational reliability through the smooth flow of the second purified water.

In the water purifier having a composite filter according to another exemplary embodiment of the present invention, since the second partition wall is disposed to extend in the axial direction along the discharge tube member, it effectively prevents the discharged third purified water from being mixed with the discharged residential water, and thus, it provides an effect of improving the operational stability of the water purifier.

In the water purifier having a composite filter according to another exemplary embodiment of the present invention, since the discharged residential water is discharged to the outside through the residential water flow path formed between the first upward guide provided on the first upper cap member and the central tube, it does not mix with the raw water or the first purified water, and thus, it provides an effect of improving the operational stability of the water purifier.

In the water purifier having a composite filter according to another exemplary embodiment of the present invention, the first partition wall is disposed to extend in the axial direction along the first upward guide, thereby preventing the discharged residential water from being mixed with the received raw water, and thus, it provides an effect of improving the operational stability of the water purifier.

In the water purifier having a composite filter according to another exemplary embodiment of the present invention, the sub-assembly of the first module is possible through the second upper cap member and the second lower cap member, thereby improving workability, and it is possible to stably fix the first upper cap member, and thus, it provides an effect of improving the operational stability of the water purifier.

In the water purifier having a composite filter according to another exemplary embodiment of the present invention, structural stability is improved while the second upper cap member and the second lower cap member are stably connected through the connecting tube, and the first purified water flows smoothly through the second through-hole formed in the connection tube, and thus, it provides an effect of improving the operational stability of the water purifier.

In the water purifier having a composite filter according to another exemplary embodiment of the present invention, it is capable of sub-assembly of the second module through the third upper cap member and the third lower cap member, thereby improving workability, and since the discharge tube member is disposed to extend upward from the third upper cap member, the third purified flow path is stably formed in the process of stacking and arranging the first module and the second module, and thus, it provides an effect of improving the operational stability of the water purifier.

In the water purifier having a composite filter according to another exemplary embodiment of the present invention, since the third upper cap member is disposed to be spaced apart at a certain distance from the lower surface of the second lower cap member, a second purified water flow path is formed between the third upper cap member and the second lower cap member such that the second purified water flow smoothly, and thus, it provides an effect of improving the operational stability of the water purifier.

In the water purifier having a composite filter according to another exemplary embodiment of the present invention, it is configured to enable simply assembly in the manner of inserting the second module into the second downward lower guide formed on the second lower cap member to stack and arrange the first module and the second module, and thus, it provides an effect of improving the workability of the water purifier.

In the water purifier with a composite filter according to another exemplary embodiment of the present invention, since a first support protrusion which is formed to protrude outward on the radial direction outer side is provided on the periphery of the peripheral surface of the third upper cap member such that the third upper cap member supports the inner surface of the second downward lower guide, it is possible to secure a second purified water flow path such that the second purified water flows through the periphery of the third upper cap member, and the first support protrusions are arranged at equal intervals such that the second purified water can evenly move in the peripheral direction of the third upper cap member, and thus, it provides an effect of improving the product reliability by improving the flow of the second purified water.

In the water purifier having a composite filter according to another exemplary embodiment of the present invention, it is capable of sub-assembly of the second module through the third upper cap member and the third lower cap member, thereby improving workability, and since the discharge tube member is disposed to extend upward from the third lower cap member, the third purified water flow path is stably formed in the process of stacking and arranging the first module and the second module, and thus, it provides an effect of improving the operational stability of the water purifier.

In the water purifier having a composite filter according to another exemplary embodiment of the present invention, the third upward upper guide formed on the third upper cap member is disposed to be spaced apart at a certain distance from the discharge tube member such that a second purified water flow path is formed between the third upward upper guide and the discharge tube member, and the second purified water can smoothly flow, and thus, it provides an effect of improving the operational stability of the water purifier.

In the water purifier having a composite filter according to another exemplary embodiment of the present invention, an upward rib which is formed to extend upward from a connector body is coupled to the central tube in a state where the connector body of the connector member is press-fitted and fixed to the inside of the second lower cap member, and the first module and the second module are simply combined in the manner of coupling a downward rib which is formed to extend downward from the connector body to the third upward upper guide, and thus, it provides an effect of improving workability.

The water purifier having a composite filter according to another exemplary embodiment of the present invention is provided with a cover lower cap that surrounds the outside of the second module, thereby preventing the mixing of raw water and the second purified water, and such a cover lower cap is configured to be easily assembled by coupling to a second downward lower guide which is formed on the second lower cap member, and thus, it provides an effect of improving workability.

In the water purifier having a composite filter according to another exemplary embodiment of the present invention, a second support protrusion which is formed to protrude outward on the radial direction outer side is provided on the periphery of the outer peripheral surface of the third lower cap member such that the third lower cap member supports the inner surface of the cover lower cap, and thus, it is possible to secure a third purified water flow path such that the third purified water flows through the periphery of the third lower cap member, and the second support protrusions are arranged at equal intervals such that the third purified water can evenly move in the peripheral direction of the third lower cap member, and thus, it provides an effect of improving product reliability by improving the flow of the third purified water.

The water purifier having a composite filter according to another exemplary embodiment of the present invention can control the flow of raw water, purified water and residential water by controlling the valve unit through the control unit, and by effectively preventing the reverse flow of these fluids, it provides an effect of improving product reliability.

The water purifier having a composite filter according to still another aspect of the present invention is capable of discharging residential water as well as raw water intake and third purified water output, and thus, user convenience is improved by integrating spiral-wound filter members to form a composite filter, and the head member of the housing unit is provided with first and second partition walls so as to form independent flow paths in which raw water, third purified water and residential water do not mix such that tubes through which the raw water, third purified water and residential water flow are concentrated on the upper part of the composite filter, and thus, it is possible to improve the degree of freedom in the layout design of other parts, and additionally, in the filtration unit, a pre-treatment filter member and a post-treatment filter member are arranged to be stacked through a first upper cap member and a second upper cap member, and a spiral-wound filter member is disposed on the radial direction inner side of such filter members such that it is configured to manufacture a composite filter by utilizing a pre-manufactured spiral-wound filter member, and thus, it provides an effect of improving manufacturability.

In the water purifier having a composite filter according to still another exemplary embodiment of the present invention, the filtration unit is provided with a second lower cap member for fixing the post-treatment filter member and the spiral-wound filter member to improve structural stability, and a connecting pipe member is provided on the radial direction inner side of the spiral-wound filter member to prevent the discharged third purified water from mixing with the second purified water, and thus, it provides an effect of improving user satisfaction by enhancing the water quality of the finally discharged third purified water.

In the water purifier having a composite filter according to still another exemplary embodiment of the present invention, the second lower cap member and the connecting pipe member are stably coupled by the pipe support guide to improve structural stability, and the discharged third purified water can stably flow, and thus, it provides an effect of improving the operational stability of the water purifier.

In the water purifier having a composite filter according to another exemplary embodiment of the present invention, a spiral-wound filter member is disposed to be spirally disposed around the central tube, and a second purified water through-hole is formed such that the second purified water flows into the second purified water flow path provided therein, and the connecting pipe member inserted to penetrate through the center of the central tube is disposed to be spaced apart at a certain distance from the central tube, thereby stably maintaining the second purified water flow path, and thus, it provides an effect of improving the operational reliability of the water purifier through the smooth flow of the second purified water..

In the water purifier having a composite filter according to still another exemplary embodiment of the present invention, the central tube is disposed to penetrate through the third lower cap member in a state where the third lower cap member is disposed at the lower part the spiral-wound filter member such that even if the first purified water flows through the upper part of the third lower cap member, it does not mix with the second purified water flowing through the lower part of the third lower cap member, and thus, it provides an effect of improving user satisfaction by preventing the deterioration of the water quality of the second purified water and improving the water quality of the third purified water that is finally discharged.

In the water purifier having a composite filter according to still another exemplary embodiment of the present invention, since the central tube is disposed to penetrate through the second through-hole formed in the third lower cap member, the penetrating state of the central tube is stably maintained, thereby improving structural stability, and the second purified water moves smoothly to the lower part of the third lower cap member through the penetrating part of the central tube, and thus, it provides an effect of improving the operational reliability of the water purifier.

In the water purifier having a composite filter according to still another exemplary embodiment of the present invention, since the third upward support guide is disposed between the spiral-wound filter member and the post-treatment filter member, it provides an effect of improving user satisfaction by preventing the deterioration of the water quality of the second purified water and enhancing the water quality of the third purified water that is finally discharged.

In the water purifier having a composite filter according to still another exemplary embodiment of the present invention, a second upward support guide is formed such that the post-treatment filter member is fixedly disposed, and thus, it provides an effect of improving the structural reliability of the composite filter.

In the water purifier having a composite filter according to still another exemplary embodiment of the present invention, since the second downward guide supports the lower surface of the fourth lower cap member, the separation state between the second lower cap member and the lower surface of the fourth lower cap member is stably maintained and the third purified water which moves to the lower part of the second lower cap member moves smoothly through the third through-hole formed in the second downward guide, and thus, it provides an effect of improving the operational stability of the water purifier.

In the water purifier having a composite filter according to still another exemplary embodiment of the present invention, a spiral-wound filter member is stably fixed through the third upper cap member, and thus, it provides an effect of improving the structural stability of the composite filter.

In the water purifier having a composite filter according to still another exemplary embodiment of the present invention, since the residential water that has moved to the upper end of the spiral-wound filter member is discharged to the outside after moving through the third upward guide, the discharge of the residential water is stably performed, and thus, it provides an effect of improving the operational stability of the water purifier.

In the water purifier having a composite filter according to still another exemplary embodiment of the present invention, the first partition wall is disposed to extend in the axial direction along the third upward guide, thereby effectively preventing the discharged residential water from being mixed with the incoming raw water, and thus, it provides an effect of improving user satisfaction by enhancing the water quality of the third purified water that is finally discharged.

In the water purifier having a composite filter according to still another exemplary embodiment of the present invention, the second partition wall is disposed to extend in the axial direction along the connecting pipe member, thereby effectively preventing the discharged third purified water from being mixed with the discharged residential water, and thus, it provides an effect of improving user satisfaction by enhancing the water quality of the third purified water that is finally discharged.

In the water purifier having a composite filter according to still another exemplary embodiment of the present invention, the pre-treatment filter member can be fixed in the manner of respectively arranging the first upper cap member and the first lower cap member on the upper part and lower part of the pre-treatment filter member such that the modularization of the composite filter is possible through the sub-assembly process, thereby improving workability, and since the first lower cap member is arranged to be stacked with the second upper cap member, the stacking state of the pre-treatment filter member and the post-treatment filter member are stably maintained, and thus, it provides an effect of improving the structural stability of the composite filter.

In the water purifier having a composite filter according to still another exemplary embodiment of the present invention, the structural stability of the composite filter is improved while the first upper cap member and the first lower cap member are stably connected through the first connecting tube, and the raw water flows smoothly through the raw water through-hole formed in the first connection tube, and thus, it provides an effect of improving the operational stability of the water purifier.

In the water purifier having a composite filter according to still another exemplary embodiment of the present invention, the structural stability is improved while the first upper cap member and the first lower cap member are stably connected through the second connecting tube, and the first purified water flows smoothly through the first purified water through-hole formed in the second connection tube, and thus, it provides an effect of improving the operational stability of the water purifier.

In the water purifier having a composite filter according to still another exemplary embodiment of the present invention, since the fourth lower cap member is disposed to be spaced apart from the lower surface of the second lower cap member, the third purified water flows smoothly, and the fourth upward support guide is arranged to simultaneously surround the second upper cap member and the second lower cap member, thereby preventing arbitrary outflow of third purified water and arbitrary inflow of raw water, and thus, it provides an effect of improving the operational stability of the water purifier.

The water purifier having a composite filter according to still another exemplary embodiment of the present invention can control the flow of raw water, third purified water and residential water by controlling the valve unit through the control unit, and it effectively prevents the reverse flow of these fluids, and thus, it provides an effect of improving the product reliability.

### [Description of Drawings]

FIG. 1 is a configuration diagram illustrating a water purifier having a composite filter according to an exemplary embodiment of the present invention.
FIG. 2 is a plan view illustrating a head member of the water purifier having a composite filter according to an exemplary embodiment of the present invention.
FIG. 3 is a cross-sectional view illustrating the disassembled state of a first module and a second module of the water purifier having a composite filter according to an exemplary embodiment of the present invention.
FIG. 4 is a cross-sectional view illustrating the assembled state of a first module and a second module of the water purifier having a composite filter according to an exemplary embodiment of the present invention.
FIG. 5 is a cross-sectional view illustrating a state in which the upper cap member and lower cap member of the water purifier having a composite filter according to an exemplary embodiment of the present invention are disassembled.
FIG. 6 is a cross-sectional view of part I-I of FIG. 5.
FIG. 7 is a cross-sectional view illustrating a state in which a filtration unit of the water purifier having a composite filter according to an exemplary embodiment of the present invention is installed in a housing unit.
FIG. 8 is a block diagram illustrating the entire water piping diagram of a water purifier having a composite filter according to an exemplary embodiment of the present invention.
FIG. 9 is a configuration diagram illustrating a water purifier having a composite filter according to another exemplary embodiment of the present invention.
FIG. 10 is a plan view illustrating a head member of the water purifier having a composite filter according to another exemplary embodiment of the present invention.
FIG. 11 is a cross-sectional view illustrating the disassembled state of a first module and a second module of the water purifier having a composite filter according to another exemplary embodiment of the present invention.
FIG. 12 is a cross-sectional view illustrating the assembled state of a first module and a second module of the water purifier having a composite filter according to another exemplary embodiment of the present invention.
FIG. 13 is a cross-sectional view illustrating a disassembled state in which the upper cap member and lower cap member of the water purifier having a composite filter according to another exemplary embodiment of the present invention are disassembled.
FIG. 14 is a cross-sectional view of part I-I of FIG. 13.
FIG. 15 is a cross-sectional view illustrating a state in which a filtration unit of the water purifier having a composite filter according to another exemplary embodiment of the present invention is installed in a housing unit.
FIG. 16 is a cross-sectional view illustrating the disassembled state of a first module and a second module of the water purifier having a composite filter according to another exemplary embodiment of the present invention.
FIG. 17 is a cross-sectional view illustrating the assembled state of a first module and a second module of the water purifier having a composite filter according to another exemplary embodiment of the present invention.
FIG. 18 is a cross-sectional view illustrating a state in which the upper cap member and lower cap member of the water purifier having a composite filter according to another exemplary embodiment of the present invention are disassembled.
FIG. 19 is a cross-sectional view of part II-II of FIG. 18.
FIG. 20 is a cross-sectional view illustrating a state in which a filtration unit of the water purifier having a composite filter according to another exemplary embodiment of the present invention is installed in a housing unit.
FIG. 21 is a configuration diagram illustrating the entire water piping diagram of the water purifier having a composite filter according to another exemplary embodiment of the present invention.
FIG. 22 is a configuration diagram illustrating the entire water piping diagram of the water purifier having a composite filter according to another exemplary embodiment of the present invention.
FIG. 23 is a configuration diagram showing a water purifier having a composite filter according to still another exemplary embodiment of the present invention.
FIG. 24 is a plan view illustrating a head member of the water purifier having a composite filter according to still another exemplary embodiment of the present invention.
FIG. 25 is a cross-sectional view illustrating the assembled state of a filtration unit of the water purifier having a composite filter according to still another exemplary embodiment of the present invention.
FIG. 26 is a cross-sectional view illustrating a disassembled state in which the upper cap member and lower cap member of the water purifier having a composite filter according to still another exemplary embodiment of the present invention are disassembled.
FIG. 27 is a cross-sectional view illustrating a state in which a filtration unit of the water purifier having a composite filter according to still another exemplary embodiment of the present invention is installed in a housing unit.
FIG. 28 is a cross-sectional view of part I-I of FIG. 26.
FIG. 29 is a cross-sectional view of part II-II of FIG. 26.
FIG. 30 is a configuration diagram illustrating the entire water piping diagram of the water purifier having a composite filter according to still another exemplary embodiment of the present invention.

### [Modes of the Invention]

Words and terms used in the present specification and claims are not limited and interpreted to the conventional or dictionary meanings, and in accordance with the principle that the inventors may define terms and concepts in order to describe their invention in the best way, these should be interpreted as meanings and concepts consistent with the technical spirit of the present invention.

Since the exemplary embodiment described in the present specification and the configuration illustrated in the drawings correspond to a preferred exemplary embodiment of the present invention and do not represent all of the technical spirit of the present invention, the corresponding configuration may have various equivalents and modifications to replace the same at the time of filing of the present invention.

In the present specification, terms such as "include" or "have" are intended to describe the presence of features, numbers, steps, operations, components, parts or a combination thereof described in the specification, but it is to be understood that it does not preclude the possibility of the presence or addition of one or more other features, numbers, steps, operations, components, parts or a combination thereof.

That a component is at the "front", "rear", "above" or "below" of another component not only includes cases where, unless otherwise specified, it is in direct contact with another component and is disposed at the "front", "rear", "above" or "below", but also cases where other components are placed in the middle. In addition, that a component is "connected" with another component includes cases where, unless otherwise specified, it is in direct contact with each other, but also cases where it is indirectly connected to each other.

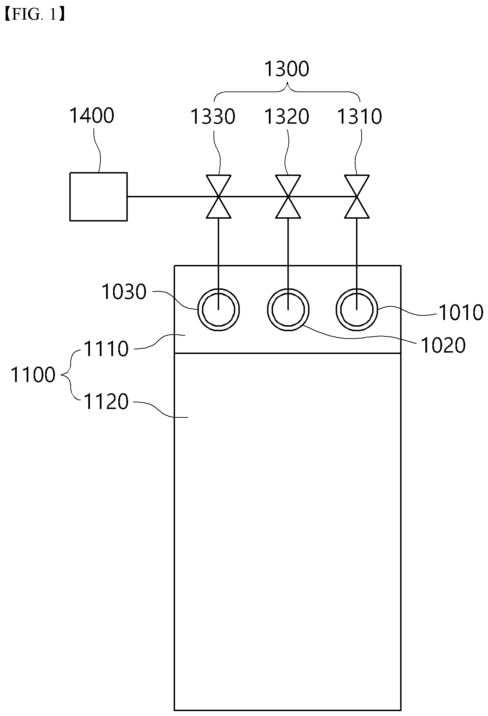

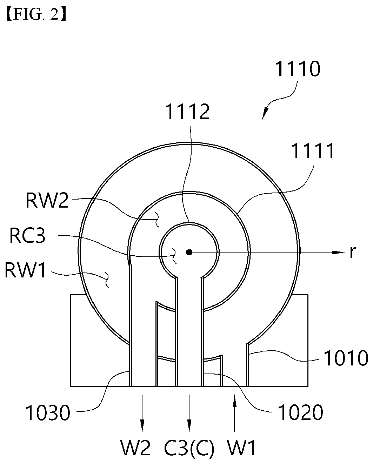

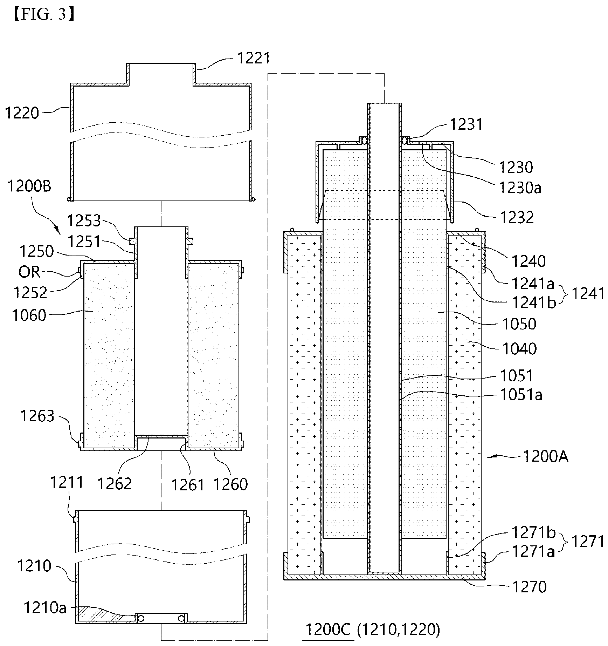

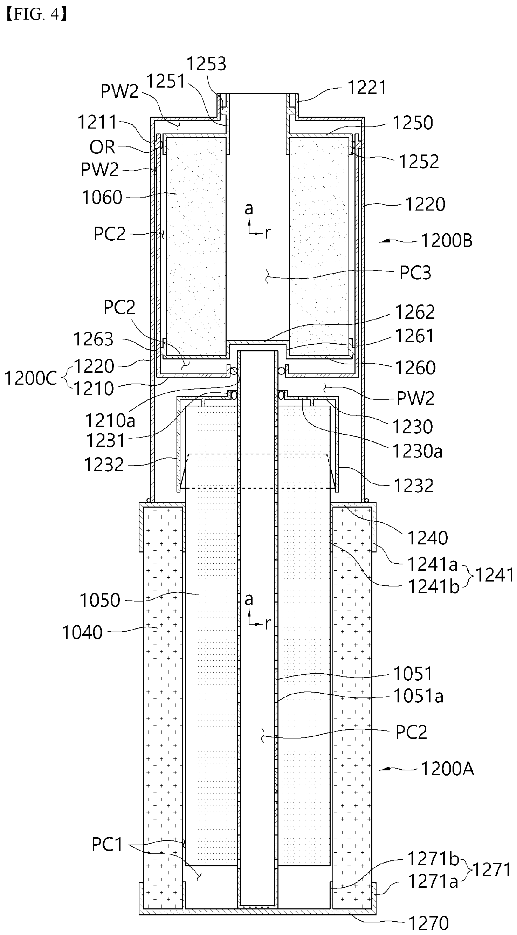

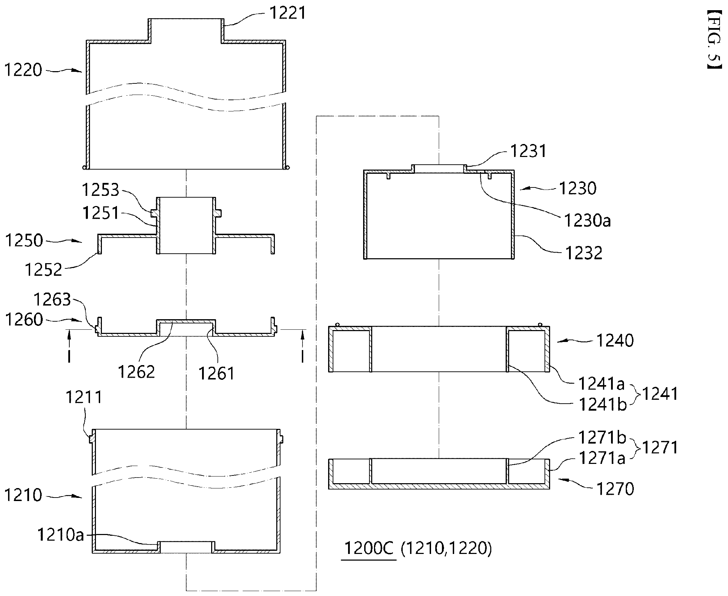

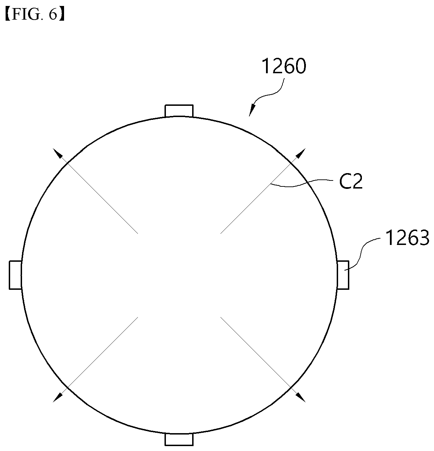

Hereinafter, the water purifier having a composite filter according to the present invention will be described with reference to the drawings. FIG. 1 is a configuration diagram illustrating a water purifier having a composite filter according to an exemplary embodiment of the present invention, FIG. 2 is a plan view illustrating a head member of the water purifier having a composite filter according to an exemplary embodiment of the present invention, FIG. 3 is a cross-sectional view illustrating the disassembled state of a first module and a second module of the water purifier having a composite filter according to an exemplary embodiment of the present invention, FIG. 4 is a cross-sectional view illustrating the assembled state of a first module and a second module of the water purifier having a composite filter according to an exemplary embodiment of the present invention, FIG. 5 is a cross-sectional view illustrating a state in which the upper cap member and lower cap member of the water purifier having a composite filter according to an exemplary embodiment of the present invention are disassembled, and FIG. 6 is a cross-sectional view of part I-I of FIG. 5. Herein, a means the axial direction of the composite filter, and r means the radial direction of the composite filter. In order to clearly describe the present invention, parts that are not relevant to the description are omitted from the drawings.

As illustrated in FIGS. 1 to 4, the water purifier having a composite filter according to the present invention may include a raw water intake port 1010 through which raw water (W1) is introduced, a purified water outlet port 1020 through which filtered purified water (C) is discharged, a housing unit 1100 which is provided with a residential water discharge port 1030 through which residential water (W2) generated in a filtering process is discharged, and a filtration unit 1200 which is disposed inside the housing unit 1100 and is provided with a pre-treatment filter member 1040 for filtering the raw water (W1) to generate first purified water (C1), a reverse osmosis filter member 1050 for filtering the first purified water (C1) to generate second purified water (C2), and a post-treatment filter member 1060 for filtering the second purified water (C2) to generate third purified water (C3). That is, the raw water (W1) introduced through the raw water intake port 1010 is filtered by sequentially passing through the pre-treatment filter member 1040, the reverse osmosis filter member 1050 and the post-treatment filter member 1060 provided in the filtration unit 1200, and the finally filtered third purified water (C3) may be provided to the user after being discharged through the purified water outlet port 1020. Alternatively, it may be stored in a separate purified water storage unit or supplied to a cold water generation unit, a hot water generation unit and an ice generation unit to generate cold water, hot water and ice. In addition, the residential water (W2) generated from the reverse osmosis filter member 1050 may be discharged to the outside of the housing unit 1100 through the residential water discharge port 1030 and then discharged to the outside of the water purifier through a separate tube. In this way, by configuring to enable raw water (W1) intake and purified water (C) discharge as well as residential water (W2) discharge, it is possible to configure a composite filter by integrating the reverse osmosis filter member 1050. In this case, the pre-treatment filter member 1040 may be a pre-carbon filter or a microfiltration (MF) filter, and the post-treatment filter member 1060 may be a post-carbon filter or a microfiltration (MF) filter. Alternatively, the pre-treatment filter member 1040 and the post-treatment filter member 1060 may include an electric deionization-type filter. The electric deionization method refers to EDI (Electro Deionization), CEDI (Continuous Electro Deionization), CDI (Capacitive Deionization) and the like. In this case, a separate filter member may be provided on the outer surface of the pre-treatment filter member 1040. As an example, this filter element may be an NT filter element. Such an NT filter member may be made of a material that is charged with static electricity to adsorb foreign substances included in the introduced raw water W1, for example, a nano-trap material. These materials may be configured to carry a positive charge. Accordingly, negatively charged foreign substances included in the raw water W1, such as viruses, bacteria and fine particles, may be adsorbed to the NT filter member by static electricity. In addition, this filter member may be a sediment filter member.

The above-described housing unit 1100 includes a head member 1110 which is provided with a first partition wall 1111 which is disposed outside in the radial direction (r) to prevent mixing of the raw water (W1) and the residential water (W2) and a second partition wall 1112 which is disposed inside in the radial direction (r) to prevent mixing of the residential water (W2) and the purified water (C), and a body member 1120 which extends from the head member 1110 and in which a filtration unit 1200 is arranged therein. The filtration unit 1200 may include a first module 1200A in which the pre-treatment filter member 1040 and the reverse osmosis filter member 1050 are sequentially provided therein, a second module 1200B in which the post-treatment filter 1060 is provided therein, and a guide member 1200C which is arranged to surround the outside of the second module such that the raw water (W1) introduced from the upper part of the housing unit 1100 moves to the first module 1200A while bypassing the second module 1200B, and a residential water flow path (PW2) through which the residential water (W2) discharged to the outside of the first module 1200A may be provided inside the guide member 1200C. That is, it has a structure in which not only the incoming raw water (W1) but also the third purified water (C3) and the discharged residential water (W2) are introduced through the upper part of the composite filter and output/discharged through the upper part, and to this end, the head member 1110 may be respectively formed with a raw water area (W1), a third purified water area (RC3) and a residential water area (RW2) through which the introduced raw water (W1), discharged third purified water (C3) and discharged residential water (W2) flow. The inside of the housing unit 1100 is provided with a raw water flow path (PW1) through which the raw water (W1) introduced to the upper part flows, and this raw water flow path (PW1) is provided to extend to a first module 1200A through the outside of the guide member 1200C. A first purified water flow path (PC1) may be provided between the aforementioned pre-treatment filter member 1040 and the reverse osmosis filter member 1050. As described above, since not only raw water (W1) is introduced and purified water (C) is discharged, but also residential water (W2) can be discharged, the reverse osmosis filter member (1050) is integrated to configure a composite filter, and each filter is modularized through a first module 1200A which is provided with the pre-treatment filter member 1040 and the reverse osmosis filter member 1050 and a second module 1200B which is with the post-treatment filter member 1060, and since the composite filter is configured by stacking and arranging the first module 1200A and the second module 1200B, the modularization of each filter member is possible through a sub-assembly process, thereby improving manufacturability, and since the 3 filter members are integrally provided the housing unit 1100, it is easy to downsize and replace the water purifier. In addition, since the raw water (W1) introduced from the upper part of the housing unit 1100 is moved to the first module 1200A through the outside of the guide member 1200C, it does not mix with the purified water (C) passing through the inside of the second module 1200B, thereby securing the operational stability of the water purifier. In addition, the first and second partition walls 1111, 1112 are provided in the head member 1110 of the housing unit 1100 to form independent flow paths in which the raw water (W1), purified water (C) and residential water (W2) do not mix, the tubes through which the raw water (W1), purified water (C) and residential water (W2) flow are concentrated on the upper part of the composite filter, and thus, it is possible to improve the layout design freedom of other parts.

As illustrated in FIG. 4, in the water purifier having a composite filter according to an exemplary embodiment of the present invention, the guide member 1200C may include a guide lower cap 1210 which is arranged to surround the second module 1200B and a guide upper cap 1220 which is disposed outside the guide lower cap 1210, and between the guide lower cap 1210 and the guide upper cap 1220, a residential water flow path (PW2) through which the residential water (W2) discharged to the outside of the first module 1200A flows may be provided. That is, in a sub-assembly state of the first module 1200A and the second module 1200B, they are mutually assembled through the guide upper cap 1220 and the guide lower cap 1210, and while the residential water (W2) is discharged to the outside of the first module 1220A, it flows through the residential water flow path (PW2) provided between the guide upper cap 1220 and the guide lower cap 1210, and thus, it does not mix with not only the raw water (W1) flowing outside the guide member 1200C, but also the purified water flowing inside the second module 1200B, thereby improving the operational stability of the water purifier. In addition, since it is not necessary to separately form a residential water flow path (PW2) through which the residential water (W2) flows inside the second module 1200B, not only the configuration of the second module 1200B is simplified, but also the flow of the second purified water (C2) and the third purified water (C3) flowing through the inside of the second module 1200B becomes smooth.

In this case, as illustrated in FIG. 4, in the water purifier having a composite filter according to an exemplary embodiment of the present invention, the guide upper cap 1220 may include an upward upper guide 1221 which extends upward to form a residential water flow path (PW2), and the first partition wall 1111 may be arranged to extend in the axial direction (a) along the upward upper guide 1221. In this case, the first partition wall 1111 is formed to extend in the axial direction (a) along the upward upper guide 1221, and when the head member 1110 and the body member 1120 are coupled to each other, the first partition wall 1111 may be coupled in a way that covers the outer surface of the upward upper guide 1221, or the first partition wall 1111 may be coupled to the inner surface of the upward upper guide 1221, or the first partition wall 1111 may be coupled in a way that it is seated on the upper end of the upward upper guide 1221. As such, since the first partition wall 1111 is arranged to extend in the axial direction (a) along the upward upper guide 1221, the discharged residential water (W2) is not mixed with the raw water (W1), thereby improving the operational stability of the water purifier.

Meanwhile, as illustrated in FIGS. 3 and 4, in the water purifier having a composite filter according to an exemplary embodiment of the present invention, the first module 1200A may include a first upper cap member 1230 in which the reverse osmosis filter member 1050 is fixedly disposed at the lower part and which is provided with a first through-hole 1230a such that the residential water (W2) is discharged to the outside of the first module 1200A. Such a first upper cap member 1230 may include a first upward guide 1231 which extends upward along the axial direction (a) and a first downward guide 1232 which extends downward along the axial direction (a). The central tube 1051 provided in the reverse osmosis filter member 1050 is disposed to penetrate through the first upper cap member 1230, and as the first upward guide 1231 is formed, the arrangement state of the central tube 1051 may be stably maintained, and when a separate O-ring (OR) is provided between the first upward guide 1231 and the central tube 1051, the residential water (W2) which has been discharged to the outside of the first module 1200A is introduced again so as to prevent a backflow. In addition, the first downward guide 1232 stably supports the reverse osmosis filter member 1050, and a separate packing which is supported by the first downward guide 1232 may be provided in the reverse osmosis filter member 1050. That is, after the residential water (W2) is discharged to the outside of the first module 1200A, it flows through the residential water flow path (PW2) provided in the guide member 1200C such that it is not mixed with the purified water (C) flowing through the inside of the first module 1200A and the second module 1200B, thereby improving the operation stability of the water purifier. In this case, as illustrated in FIG. 3, the first through-hole 1230a may be formed on only one side of the first upper cap member 1230 based on the center in the radial direction (r). That is, the residential water (W2) discharged to the upper end of the reverse osmosis filter member 1050 moves to the outside of the first module 1200A through the first through-hole 1230a, and the residential water (W2) which has been discharged to a location where the first through-hole 1230a is not formed moves along the radial direction (r) to a location where the first through-hole 1230a is formed, and then is discharged to the outside of the first module 1200A through the first through-hole 1230a. In this way, a spacer may extend downward on the lower surface of the first upper cap member 1230 such that the residential water (W2) moves smoothly along the radial direction (r), and the spacer may be provided such that the first upper cap member 1230 and the reverse osmosis filter member 1050 are disposed to be spaced apart from each other by a certain distance, and thus, the flow of residential water (W2) in the radial direction (r) becomes smooth. These spacers are formed to extend in the circumferential direction, and a plurality of spacers may be disposed to be spaced apart from each other at equal intervals such that the discharged residential water (W2) flows therethrough.

In addition, as illustrated in FIGS. 3 and 4, in the water purifier having a composite filter according to an exemplary embodiment of the present invention, the first module 1200A includes a second upper cap member 1240 in which the pre-treatment filter member 1040 is fixedly disposed at the lower part, and at the same time, the reverse osmosis filter member 1050 is disposed to penetrate therethrough, and the guide upper cap 1220 may be disposed to extend up to the second upper cap member 1240. That is, since the guide upper cap 1220 is disposed to extend up to the second upper cap member 1240, the raw water (W1) flowing toward the first module 1200A may be prevented from flowing into the inside of the guide upper cap 1220, and the residential water (W2) which has been discharged to the outside of the first module 1200Ais prevented from flowing through the outside of the guide upper cap 1220, thereby improving the operational stability of the water purifier. A second downward guide 1241 which extends downward along the axial direction (a) may be formed on the second upper cap member 1240. The second downward guide 1241 may include a 2-1 downward guide 1241a which is disposed outside in the radial direction (r) to fix the pre-treatment filter member 1040, and a 2-2 downward guide 1241b which is disposed on the radial direction (r) inner side to fix the reverse osmosis filter member 1050. That is, each of the filter members 40, 50 is stably fixed through the second downward guide 1241 which is formed to extend downward from the lower surface of the second upper cap member 1240, thereby improving the durability of the water purifier. In this case, a second lower cap member 1270 may be provided at the lower end of the first module 1200A. A second upward guide 1271 which extends upward along the axial direction (a) may be formed on the second lower cap member 1270. The second upward guide 1271 may include a 2-1 upward guide 1271a which is disposed outside in the radial direction (r) to fix the pre-treatment filter member 1040, and a 2-2 upward guide 1271b which is disposed the radial direction (r) inner side to fix the reverse osmosis filter member 1050. That is, each of the filter members 40, 50 is stably fixed through the second upward guide 1271 which is formed to extend upward from the upper surface of the second lower cap member 1270, thereby improving the durability of the water purifier, and additionally, as the first module 1200A is sub-assembled through the second upper cap member 1240 and the second lower cap member 1270, the modularization of each filter member is possible.

Moreover, as illustrated in FIGS. 3 and 4, in the water purifier having a composite filter according to an exemplary embodiment of the present invention, the first module 1200A may include a central tube 1051 which supports the reverse osmosis filter member 1050 to be wound in a spiral shape, and in which a second through-hole 1051a is formed such that the second purified water (C2) flows therein, and the central tube 1051 may be disposed to penetrate through the center of the guide lower cap 1210 such the second purified water (C2) flows toward the second module 1200B. That is, while the reverse osmosis filter member 1050 is wound around the central tube 1051 in a spiral shape, the first upper cap member 1230 is seated on the upper part, and after the residential water (W2) discharged through the upper end of the reverse osmosis filter member 1050 moves to the residential water flow path (W2) through the first through-hole 1230a, it may be discharged to the outside of the first module 1200A. In this case, the upper end of the central tube 1051 may be inserted into the second module 1200B while penetrating the guide lower cap 1210 such that the second purified water (C2) moves into the second module 1200B. In addition, the second purified water (C2) moving through the inner surface of the reverse osmosis filter member 1050 moves to the second purified water flow path (PC2) through the second through-hole 1051a of the central tube 1051. That is, since the central tube 1051 is provided on the inner peripheral surface of the reverse osmosis filter member 1050 and the reverse osmosis filter member 1050 is disposed while winding in a spiral shape, the second purified water flow path (PC2) may be stably maintained. A third through-hole 1210a through which the central tube 1051 is disposed to penetrate may be formed at the center of the guide lower cap 1210. When such a third through-hole 1210a is formed to extend a certain distance upward along the axial direction (a), the arrangement state of the central tube 1051 may be stably maintained, and when a separate O-ring (OR) is provided between the third through-hole 1210a and the central tube 1051, the residential water (W2) discharged to the outside of the first module 1200A is prevented from flowing into the guide lower cap 1210, and at the same time, it is possible to prevent the second purified water (C2) flowing inside the guide lower cap 1210 from leaking out.

Meanwhile, as illustrated in FIG. 4, in the water purifier having a composite filter according to an exemplary embodiment of the present invention, the second module 1200B includes a third upper cap member 1250 and a third lower cap member 1260 in which the post-treatment filter member 1060 is fixedly disposed, and the third lower cap member 1260 may be disposed to be spaced apart at a certain distance from the upper surface of the guide lower cap 1210 such that the second water flow path (PC2) extends to the periphery of the third lower cap member 1260. That is, while the third lower cap member 1260 is disposed to be spaced apart at a certain distance from the upper surface of the guide lower cap 1210, the second purified water flow path (PC2) is formed between the third lower cap member 1260 and the guide lower cap 1210 such that the second purified water (C2) flows smoothly, thereby improving the operational stability of the water purifier.

In this case, as illustrated in FIGS. 4 and 5, in the water purifier having a composite filter according to an exemplary embodiment of the present invention, an upwardly protruding support surface 1261 may be formed in the center of the third lower cap member 1260 to allow the central tube 1051 to be inserted. That is, since the central tube 1051 is inserted into the support surface 1261 which is formed to protrude upward from the third lower cap member 1260, the central tube 1051 may be stably fixed, thereby improving structural stability, and since the second purified water (C2) flows stably, the operation stability of the water purifier is also improved. However, it is preferable that such a support surface 1261 be configured to be spaced apart from the upper end of the central tube 1051 by a certain distance. This is because the second purified water (C2), which has moved to the second module 1200B through the central tube 1051, is changed in direction by a conversion surface 1262 to be described below, and may move to the lower part of the third lower cap member 1260. Therefore, fixing protrusions may be formed to support the central tube 1051 even when the support surface 1261 is spaced apart from the upper part of the central tube 1051 by a certain distance, and such fixing protrusions may be configured to support the central tube 1051 in a state of being spaced apart from each other such that the second purified water (C2) flows therein.

Additionally, in the water purifier having a composite filter according to an exemplary embodiment of the present invention, a conversion surface 1262 which converts the flow direction of the second purified water (C2) such that the second purified water (C2) introduced in the axial direction (a) through the central tube 1051 flows in the radial direction (r) may be provided at the upper end of the support surface 1261. That is, since the flow direction of the second purified water (C2) introduced in the axial direction (a) through the central tube 1051 is converted to the radial direction (r) by the conversion surface 1262, the second purified water (C2) flows stably, thereby improving the operational stability of the water purifier. Such a conversion surface 1262 may be disposed to be spaced apart at a certain distance from the upper end of the central tube 1051 such that the second purified water (C2) flows stably.

As illustrated in FIGS. 5 and 6, in the water purifier having a composite filter according to an exemplary embodiment of the present invention, the third lower cap member 1260 may include at least two or more first support protrusions 1263 which are formed to protrude outward in the radial direction (r) around the periphery of the outer peripheral surface, and the first support protrusions 1263 may be disposed to be spaced apart from each other at equal intervals. That is, the first support protrusions 1263 which are formed to protrude outward in the radial direction (r) are provided around the periphery of the outer peripheral surface of the third lower cap member 1260 such that the third lower cap member 1260 supports the inner surface of the guide lower cap 1210, and thus, it is possible to secure the second purified water flow path (PC2) such that the second purified water (C2) flows through the periphery of the third lower cap member 1260, and since the first support protrusions 1263 are disposed at equal intervals, the second purified water (C2) may evenly move in the peripheral direction of the third lower cap member 1260, thereby improving the product reliability by improving the flow of the second purified water (C2). Meanwhile, an O-ring (OR) may be provided on the periphery of the outer peripheral surface of the third upper cap member 1250 so as to prevent the inflow of the discharged residential water (W2) and the outflow of the second purified water (C2). A third purified water flow path (PC3) through which the third purified water (C3) flows may be formed at the center of the post-treatment filter member 1060. In this case, the guide lower cap 1210 may include at least two or more second support protrusions 1211 which are formed to protrude outward in the radial direction (r) on the periphery of the outer peripheral surface, and the second support protrusions 1211 may be disposed to be spaced apart from each other at equal intervals. That is, when the second support protrusions 1211 are formed to protrude outward in the radial direction (r) on the periphery of the outer peripheral surface of the guide lower cap 1210, it supports the inner surface of the guide upper cap 1220, thereby improving the structural stability, and at the same time, it is possible to secure a residential water flow path (PW2) such that the discharged residential water (W2) flows through the periphery of the guide lower cap 1210, and since the second support protrusions 1211 are disposed at equal intervals, the residential water (W2) may move evenly in the peripheral direction of the guide lower cap 1210, thereby improving product reliability by improving the flow of residential water (W2).

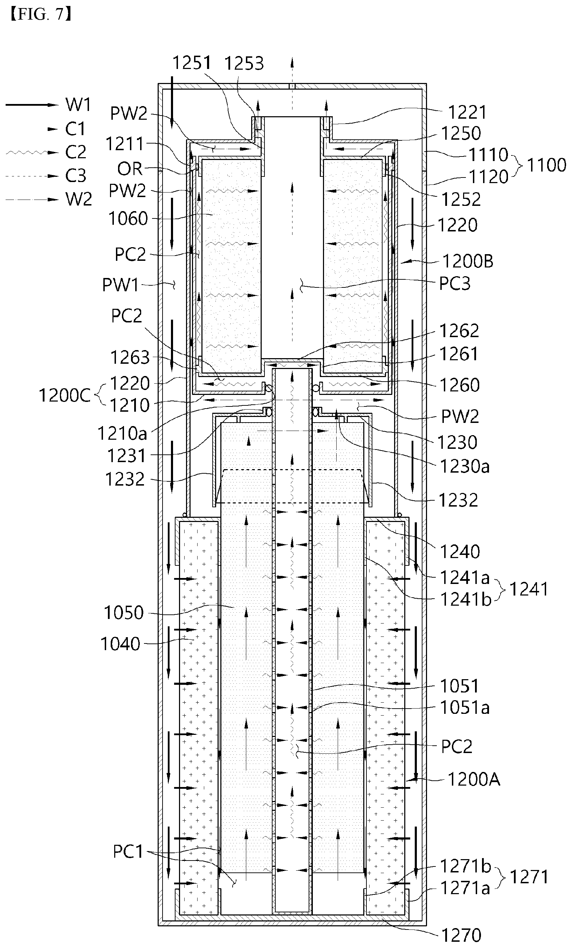

FIG. 7 is a cross-sectional view illustrating a state in which a filtration unit of the water purifier having a composite filter according to an exemplary embodiment of the present invention is installed in a housing unit.

As illustrated in FIGS. 4 and 7, in the water purifier having a composite filter according to an exemplary embodiment of the present invention, the third upper cap member 1250 may include a third upward guide 1251 which extends upward to form the third water purification channel (PC3), and the second partition wall 1112 may extend along the third upward guide 1251 in the axial direction (a). In this case, such a second partition wall 1112 is formed to extend in the axial direction (a) along the third upward guide 1251, and when the head member 1110 and the body member 1120 are coupled to each other, the second partition wall 1112 may be coupled in a way that covers the outer surface of the third upward guide 1251, the second partition wall 1112 may be coupled in a way that it is inserted into the inner surface of the third upward guide 1251, or the second partition wall 1112 may be coupled in a way that it is seated on the upper end of the third upward guide 1251. In this way, when the second partition wall 1112 is disposed to extend in the axial direction (a) along the third upward guide 1251, if the mixing of the discharged third purified water (C3) with the discharged residential water (W2) is prevented. the operation stability of the water purifier may be improved. A third downward guide 1252 which extends downward may be provided on such a third upper cap member 1250. The post-treatment filter member 1060 is stably fixed through the third downward guide 1252 which extends downward from the lower surface of the third upper cap member 1250, thereby improving the durability of the water purifier. In addition, at least two or more third support protrusions 1253 which are formed to protrude outward in the radial direction (r) are provided on the periphery of the outer peripheral surface of the aforementioned third upward guide 1251, and the third support protrusions 1253 may be disposed to be spaced with each other at equal intervals. That is, when the third support protrusions 1253 are formed to protrude, they support the inner surface of the upward upper guide 1221 formed on the guide upper cap 1220, and thus, the structural stability is improved, and at the same time, the residential water flow path (PW2) may be secured, and when the third support protrusions 1253 are arranged at equal intervals, the residential water (W2) may move evenly, thereby improving the product reliability by improving the flow of the residential water (W2).

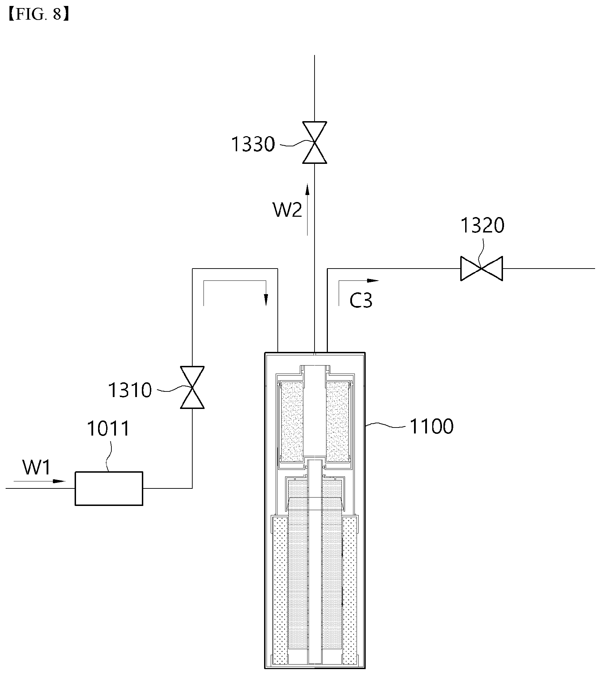

FIG. 8 is a block diagram illustrating the entire water piping diagram of a water purifier having a composite filter according to an exemplary embodiment of the present invention.

As illustrated in FIG. 8, the water purifier having a composite filter according to an exemplary embodiment of the present invention may further include a valve unit 1300 for regulating the flow of raw water (W1), purified water (C) and residential water (W2), and a control unit 1400 for controlling the operation of the valve unit 1300. Such a valve unit 1300 may include a first valve 1310 that regulates the flow of raw water (W1), a second valve 1320 that regulates the flow of the third purified water (C3), and a third valve 1330 that regulates the flow of residential water (W2). In this case, the introduced raw water (W1) passes through a pressure reducing valve 1011 and moves in a reduced pressure state. That is, by controlling the valve unit 1300 through the control unit 1400, it is possible to control the flow of the raw water (W1), the third purified water (C3) and the residential water (W2), and by effectively preventing these fluids from flowing backward, it is possible to secure the product reliability.

As described above, the water purifier having a composite filter according to an exemplary embodiment of the present invention is capable of not only the inflow of raw water (W1) and the outflow of purified water (C) but also the discharge of residential water (W2), and accordingly, a composite filter is configured by integrating the reverse osmosis filter member 1050, and each filter is modularized through a first module 1200A which is provided with a pre-treatment filter member 1040 and a reverse osmosis filter member 1050, and a second module 1200B which is provided with a post-treatment filter member 1060, and the composite filter is configured in the manner of stacking and arranging the first module 1200A and the second module 1200B, thereby improving the manufacturability, and since the housing unit 1100 is provided with 3 filter elements, it is easy to miniaturize and replace the water purifier. In addition, since the raw water (W1) introduced through the upper part of the housing unit 1100 moves to the first module 1200A through the outside of the guide member 1200C, it does not mix with the purified water (C) passing through the inside of the second module 1200B, thereby securing the operational stability of the water purifier. Moreover, since the head member 1110 of the housing unit 1100 is provided with first and second partition walls 1111, 1112 to form independent flow paths in which raw water (W1), purified water (C) and residential water (W2) do not mix, the tubes through which raw water (W1), purified water (C) and residential water (W2) flow are concentrated at the upper part of the composite filter, thereby improving the freedom of layout design in other parts.

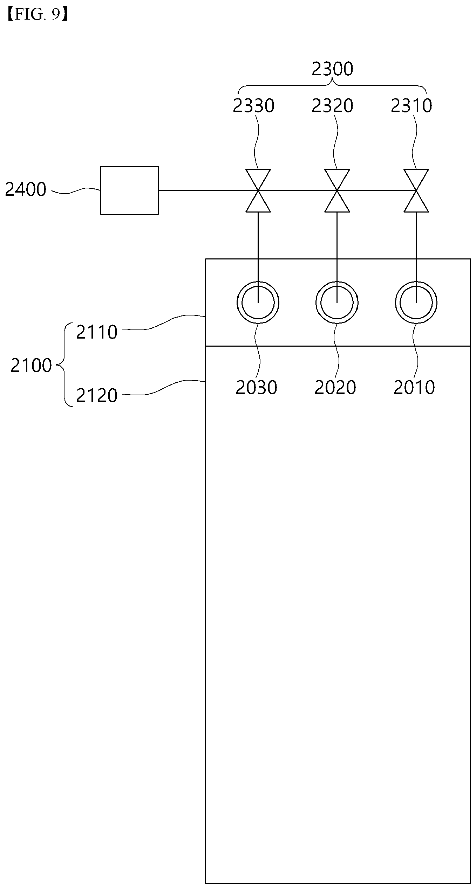

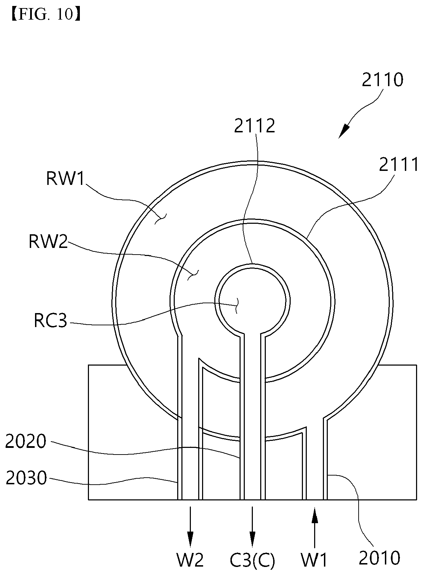

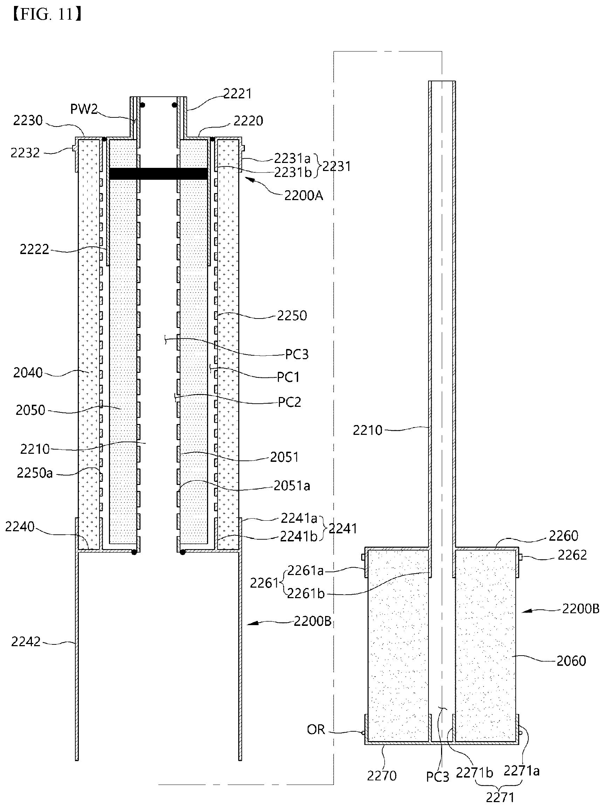

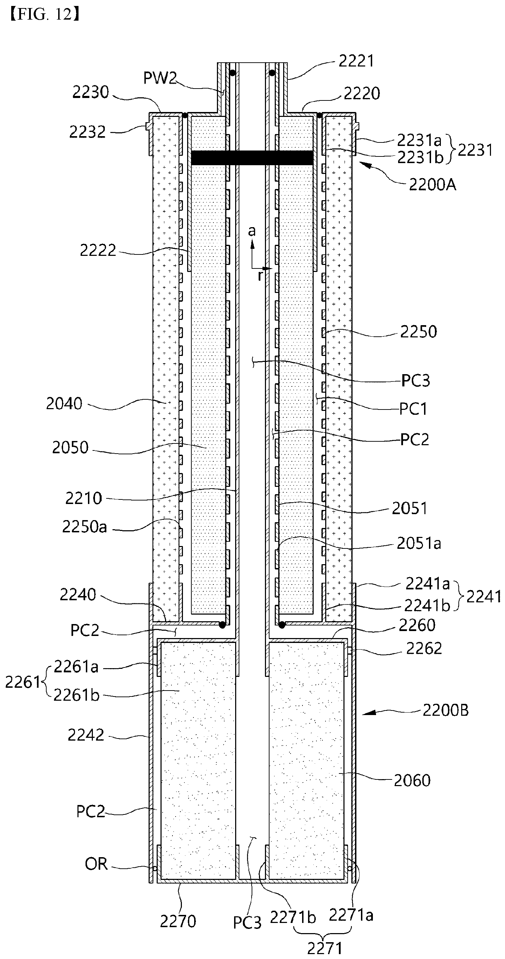

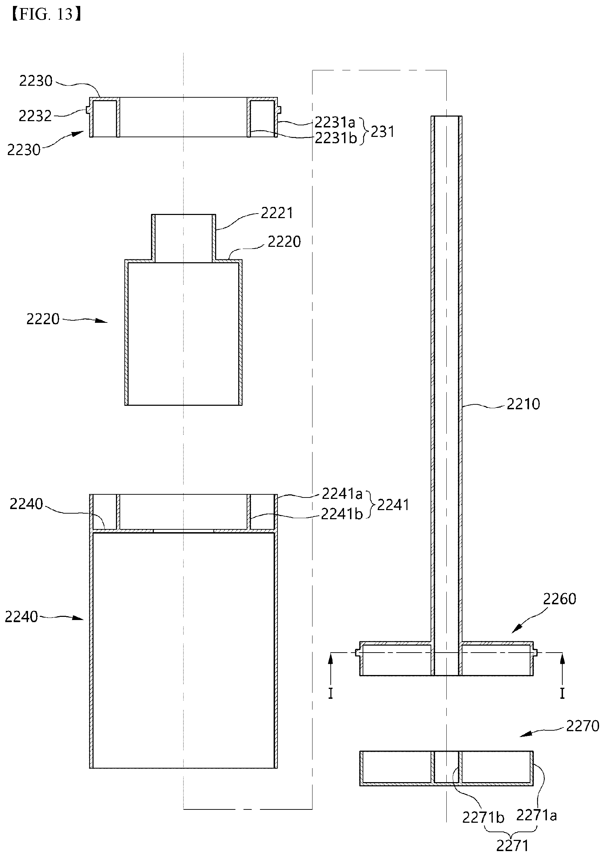

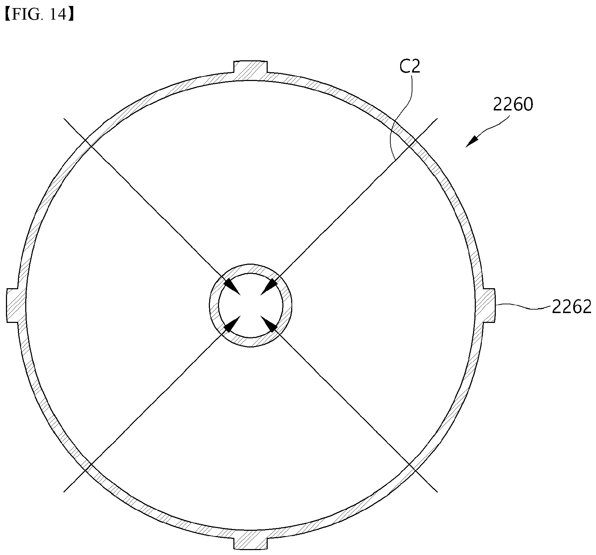

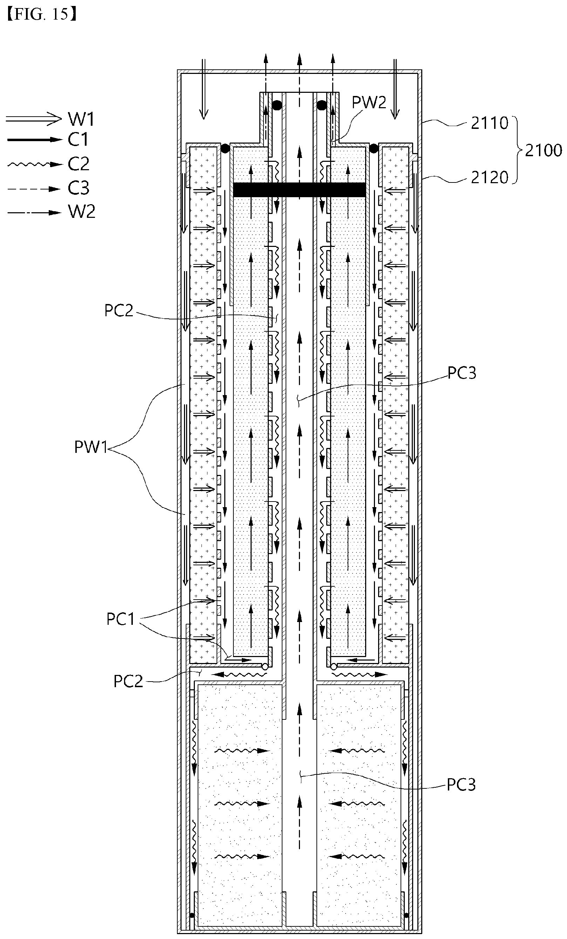

FIG. 9 is a configuration diagram illustrating a water purifier having a composite filter according to another exemplary embodiment of the present invention, FIG. 10 is a plan view illustrating a head member of the water purifier having a composite filter according to another exemplary embodiment of the present invention, FIG. 11 is a cross-sectional view illustrating the disassembled state of a first module and a second module of the water purifier having a composite filter according to another exemplary embodiment of the present invention, FIG. 12 is a cross-sectional view illustrating the assembled state of a first module and a second module of the water purifier having a composite filter according to another exemplary embodiment of the present invention, FIG. 13 is a cross-sectional view illustrating a disassembled state in which the upper cap member and lower cap member of the water purifier having a composite filter according to another exemplary embodiment of the present invention are disassembled, FIG. 14 is a cross-sectional view of part I-I of FIG. 13, and FIG. 15 is a cross-sectional view illustrating a state in which a filtration unit of the water purifier having a composite filter according to another exemplary embodiment of the present invention is installed in a housing unit.

As illustrated in FIGS. 9 to 12, the water purifier having a composite filter according to the present invention may include a housing unit 2100 which is provided with a raw water intake port 2010 through which raw water (W1) is introduced, a purified water outlet port 2020 through which filtered purified water (C) is discharged and a residential water discharge port 2030 through which residential water (W2) generated in a filtering process is discharged, and a filtration unit 2200 which is disposed inside the housing unit 2100 and is provided with a pre-treatment filter member 2040 for filtering the raw water (W1) to generate first purified water (C1), a reverse osmosis filter member 2050 for filtering the first purified water (C1) to generate second purified water (C2) and a post-treatment filter member 2060 for filtering second purified water (C2) to generate third purified water (C3). That is, the raw water (W1) introduced through the raw water intake port 2010 sequentially passes through the pre-treatment filter member 2040, the reverse osmosis filter member 2050 and the post-treatment filter member 2060 provided in the filtration unit 2200, and the finally filtered third purified water (C3) may be provided to the user after being discharged through the purified water outlet port 2020. Alternatively, it may be stored in a separate purified water storage unit or supplied to a cold water generating unit, a hot water generating unit and an ice generating unit to generate cold water, hot water and ice. In addition, the residential water (W2) generated from the reverse osmosis filter member 2050 may be discharged to the outside of the housing unit 2100 through the residential water discharge port 2030 and then discharged to the outside of the water purifier through a separate tube. In this way, by configuring to enable raw water (W1) intake and purified water (C) output as well as residential water (W2) discharge, it is possible to configure a composite filter by integrating the reverse osmosis filter member 2050. In this case, the pre-treatment filter member 2040 may be a pre-carbon filter or a microfiltration (MF) filter, and the post-treatment filter member 2060 may be a post-carbon filter or a microfiltration (MF) filter. Alternatively, the pre-treatment filter member 2040 and the post-treatment filter member 2060 may include electric deionization-type filters. The electric deionization method refers to EDI (Electro Deionization), CEDI (Continuous Electro Deionization), CDI (Capacitive Deionization) and the like. In this case, a separate filter member may be provided on the outer surface of the pre-treatment filter member 2040. As an example, such a filter element may be an NT filter element. Such an NT filter member may be made of a material that is charged with static electricity to adsorb foreign substances included in the introduced raw water (W1), for example, a nano trap material. These materials may be configured to carry a positive charge. Accordingly, negatively charged foreign substances included in the raw water (W1), such as viruses, bacteria and fine particles, may be adsorbed to the NT filter member by static electricity. In addition, such a filter member may be a sediment filter member.

The above-described housing unit 2100 includes a head member 2110 which is provided with a first partition wall 2111 disposed on the radial direction (r) outer side to prevent mixing of the raw water (W1) and the residential water (W2) and a second partition wall 2112 which is disposed on the radial direction (r) inner side to prevent mixing of the residential water W2 and the purified water (C), and a body member 2120 which extends from the head member 2110 and in which a filtration unit 2200 is disposed therein. The filtration unit 2200 includes a first module 2200A in which the pre-treatment filter member 2040 and the reverse osmosis filter member 2050 are sequentially provided therein, and a second module 2200B which is disposed at the lower part of the first module 2200A and is provided with the post-treatment filter member 2060 therein, and the second module 2200B may include a discharge tube member 2210 which is disposed to penetrate through the center of the first module 2200A such that the third purified water (C3) is discharged to the outside. That is, it has a structure in which not only the introduced raw water (W1) but also the output third purified water (C3) and the discharged residential water (W2) are introduced through the upper part of the composite filter and are output/discharged through the upper part of the composite filter, and to this end, the head member 2110 may be respectively formed with a raw water area (RW1) through which the incoming raw water (W1) flows, a third purified water area (RC3) through which the discharged third purified water (C3) flows, and a residential water area (RW2) through which the discharged residential water (W2) flows. The inside of the housing unit 2100 is provided with a raw water flow path (PW1) through which the raw water (W1) introduced from the upper part flows, and this raw water flow path (PW1) extends to the first module 2200A. A first water purification channel (PC1) may be provided between the aforementioned pre-treatment filter member 2040 and the reverse osmosis filter member 2050. As described above, as it is possible to introduce raw water (W1) and output purified water (C), as well as discharge residential water (W2), a composite filter is configured by integrating the reverse osmosis filter member 2050, and each filter is modularized through a first module 2200A which is provided with a pre-treatment filter member 2040 and a reverse osmosis filter member 2050, and a second module 2200B which is provided with a post-treatment filter member 2060, and the composite filter is configured in the manner of stacking and arranging the first module 2200A and the second module 2200B, the modularization of each filter member is possible through the sub-assembly process, thereby improving manufacturability, and since 3 filter members are integrated into the housing unit 2100, it is easy to miniaturize and replace the water purifier. In addition, the discharge tube member 2210 is disposed to penetrate through the center of the first module 2200A such that the third purified water (C3) generated from the second module 2200B disposed at the lower part is discharged to the outside such that the third purified water (C3) is not mixed with the second purified water (C2), thereby securing the operational stability of the water purifier. Moreover, since the first to second partition walls 111, 112 are provided in the head member 2110 of the housing unit 2100 to form independent flow paths in which the raw water (W1), the purified water (C) and the residential water (W2), the tubes through which the raw water (W1), the purified water (C) and the residential water (W2) flow are concentrated on the upper part of the composite filter, thereby improving the freedom of layout design of other parts.

As illustrated in FIGS. 11 and 12, in the water purifier having a composite filter according to another exemplary embodiment of the present invention, the first module 2200A supports the reverse osmosis filter member 2050 to be wound in a spiral shape, and includes a central tube 2051 in which a first through-hole 2051a is formed such that the second purified water (C2) flows therein, and the discharge tube member 2210 is disposed to penetrate through the center of the central tube 2051, and they may be disposed to be spaced apart at a certain distance such that a second purified flow path (PC2) through which the second purified water (C2) flows may be formed between the central tube 2051 and the discharge tube member 2210. That is, a reverse osmosis filter member 2050 is disposed to be wound in a spiral shape and disposed on the central tube 2051, and a first through-hole 2051a is formed such that the second purified water (C2) flows into the second purified water flow path (PC2) provided therein, and the discharge tube member 2210 inserted to penetrate through the center of the central tube 2051 is disposed to be spaced apart at a certain distance from the central tube 2051 such that the second purified water flow path (PC2) is maintained stably, thereby securing the operational reliability through the smooth flow of the second purified water (C2). Such a central tube 2051 supports the inner surface of the reverse osmosis filter member 2050 for structural stability of the reverse osmosis filter member 2050, and as described above, when the reverse osmosis filter member 2050 is configured to be wound around the central tube 2051, it may be formed integrally with the reverse osmosis filter member 2050, but the present invention is not necessarily limited thereto, and it is also possible to configure the reverse osmosis filter member 2050 to be wound around the central tube 2051 while being integrally formed with the second lower cap member 2240. In this case, a separate O-ring may be provided between the central tube 2051 and the second lower cap member 2240, which will be described below, and through this, it is possible to prevent the first purified water (C1) from flowing into the second purified water flow path (PC2).

Meanwhile, as illustrated in FIGS. 12 and 15, in the water purifier having a composite filter according to another exemplary embodiment of the present invention, the second partition wall 2112 may be disposed to extend in the axial direction (a) along the discharge tube member 2210. In this case, the second partition wall 2112 is formed to extend in the axial direction (a) along the discharge tube member 2210, and when the head member 2110 and the body member 2120 are mutually coupled, the second partition wall 2112 may be coupled in a way that it covers the outer surface of the discharge tube member 2210, the second partition wall 2112 may be coupled to be inserted into the inner surface of the discharge tube member 2210, or the second partition wall 2112 may be coupled in a way that it is seated on the upper end of the tube member 2210. As described above, since the second partition wall 2112 is disposed to extend in the axial direction (a) along the discharge tube member 2210, the operational stability of the water purifier is improved by effectively preventing the discharged third purified water (C3) from mixing with the discharged residential water (W2).

As illustrated in FIGS. 11 and 12, in the water purifier having a composite filter according to another exemplary embodiment of the present invention, the first module 2200A includes a first upper cap member 2220 in which the reverse osmosis filter member 2050 is disposed at the lower part, and the first upper cap member 2220 may include a first upward guide 2221 which is disposed to be spaced apart at a certain distance from the central tube 2051 to form a residential water flow path (PW2) through which the residential water (W2) is discharged. Such a first upward guide 2221 extends upward along the axial direction (a) so as to be parallel to the central tube 2051 and guides the discharged residential water (W2). That is, since the discharged residential water (W2) is discharged to the outside through the residential water flow path (PW2) formed between the first upward guide 2221 provided in the first upper cap member 2220 and the central tube 2051, it does not mix with the raw water (W1) or the first purified water (C 1), thereby improving the operational stability of the water purifier. In this case, a spacer may be extended downward on the lower surface of the first upper cap member 2220 such that the residential water (W2) discharged to the upper end of the reverse osmosis filter member 2050 moves smoothly along the radial direction (r), and since the spacer is provided, the first upper cap member 2220 and the reverse osmosis filter member 2050 are arranged to be spaced apart from each other at a certain distance to facilitate the smooth flow of the residential water (W2) in the radial direction (r). Such spacers are formed to extend in the circumferential direction, and a plurality of spacers may be disposed to be spaced apart from each other at equal intervals such that discharged residential water (W2) flows therethrough. In addition, the first upper cap member 2220 may include a first downward guide 2222 which extends downward along the axial direction (a). The first downward guide 2222 stably supports the reverse osmosis filter member 2050, and the reverse osmosis filter member 2050 may be provided with a separate packing that is supported by the first downward guide 232.

In addition, as illustrated in FIGS. 12 and 15, in the water purifier having a composite filter according to another exemplary embodiment of the present invention, the first partition wall 2111 may be disposed to extend in the axial direction (a) along the first upward guide 2221. In this case, the first partition wall 2111 is formed to extend in the axial direction (a) along the first upward guide 2221, and when the head member 2110 and the body member 2120 are coupled to each other, the first partition wall 2111 may be coupled in a way that covers the outer surface of the first upward guide 2221, the first partition wall 2111 may be coupled in a way that it is inserted into the inner surface of the first upward guide 2221, or the first partition wall 2111 may be coupled in a way that it is seated on the upper end of the first upward guide 2221. That is, since the first partition wall 2111 is arranged to extend in the axial direction (a) along the first upward guide 2221, the discharged residential water (W2) does not mix with the incoming raw water (W1), thereby improving the operational stability of the water purifier.

As illustrated in FIGS. 11 and 12, in the water purifier having a composite filter according to another exemplary embodiment of the present invention, the first module 2200A includes a second upper cap member 2230 and a second lower cap member 2240 on which the pre-treatment filter member 2040 is fixed, and the first upward guide 2221 may be disposed to penetrate the second upper cap member 2230. In this case, an auxiliary support protrusion 2232 may be provided on the periphery of the second upper cap member 2230 to support the inner surface of the body member 2120. Since such an auxiliary support protrusion 2232 is formed to protrude outward in the radial direction (r) on the periphery of the outer peripheral surface of the second upper cap member 2230 to support the inner surface of the body member 2120, it is possible to secure a raw water flow path (PW1) such that the raw water (W1) introduced through the upper part of the housing unit 2100 moves to the filtration unit 2200, and the auxiliary support protrusions 2232 are arranged at equal intervals to allow the raw water (W1) to move evenly in the peripheral direction of the second upper cap member 2230, thereby securing the product reliability through improving the flow of the raw water (W1). Such a second upper cap member 2230 may be formed with a second downward guide 2231 which extends downward along the axial direction (a). The second downward guide 2231 may include a 2-1 downward guide 2231a which is disposed on the radial direction (r) outer side to fix the pre-treatment filter member 2040, and a 2-2 downward guide 2231b which is disposed on the radial direction (r) inner side to fix the reverse osmosis filter member 2050. That is, each of the filter members 40, 50 is stably fixed through the second downward guide 2231 which is formed to extend downward from the lower surface of the second upper cap member 2230, thereby enhancing the durability of the water purifier. In addition, a second upward guide 2241 which extends upward along the axial direction (a) may be formed on the second lower cap member 2240. The second upward guide 2241 may include a 2-1 upward guide 2241a which is disposed on the radial direction (r) outer side to fix the pre-treatment filter member 2040, and a 2-2 upward guide 2241b which is disposed on the radial direction (r) inner side to fix the reverse osmosis filter member 2050. That is, each of the filter members 40, 50 is stably fixed through the second upward guide 2241 which is formed to extend upward from the upper surface of the second lower cap member 2240, thereby improving the durability of the water purifier, and additionally, since the first module 2200A is sub-assembled through the second upper cap member 2230 and the second lower cap member 2240, the modularization of each filter member is possible, thereby enhancing workability. In this case, a separate O-ring may be provided between the first upper cap member 2220 and the second upper cap member 2230 to prevent the introduced raw water (W1) and the first purified water C1 from mixing.

In addition, as illustrated in FIGS. 11 and 12, the water purifier having a composite filter according to another exemplary embodiment of the present invention may be provided with a connecting tube 2250 for connecting the second upper cap member 2230 and the second lower cap member 2240, and a second through-hole 2250a through which the first purified water (C1) flows may be formed in the connecting tube 2250. The second upper cap member 2230 and the second lower cap member 2240 are stably connected through the connecting tube 2250, thereby improving structural stability, and since the first purified water (C1) flows smoothly through the second through-hole 2250a formed in the connecting tube 2250, it is possible to secure the operational stability of the water purifier may be ensured. Such a connecting tube 2250 supports the inner surface of the pre-treatment filter member 2040 for the structural stability of the pre-treatment filter member 2040, and when the pre-treatment filter member 2040 is configured in the manner of being wound around the connecting tube 2250, it may be integrally formed with the pre-treatment filter member 2040, but the present invention is not necessarily limited thereto, and while is integrally formed with the second upper cap member 2230 and the second lower cap member 2240, it is also possible to configure the pre-treatment filter member 2040 to be wound around the connecting tube 2250.

Meanwhile, as illustrated in FIGS. 11 and 12, in the water purifier having a composite filter according to another exemplary embodiment of the present invention, the second module 2200B may include a third upper cap member 2260 and a third lower cap member 2270 on which the post-treatment filter member 2060 is fixedly disposed, and the discharge tube member 2210 may be disposed to extend upward from the third upper cap member 2260. That is, the sub-assembly of the second module 2200B is possible through the third upper cap member 2260 and the third lower cap member 2270, thereby improving the workability, and since the discharge tube member 2210 is disposed to extend upward from the third upper cap member 2260, the third water purification channel (PC3) is stably formed in the process of stacking and arranging the first module 2200A and the second module 2200B, thereby securing the operational stability of the water purifier. In this case, a third downward guide 2261 which extends downward along the axial direction (a) may be formed on the third upper cap member 2260. The third downward guide 2261 may include a 3-1 downward guide 2261a which fixes the radial direction (r) outer side of the post-treatment filter member 2060, and a 3-2 downward guide 2261b which fixes the radial (r) inner side of the post-treatment filter member 2060. In addition, a third upward guide 2271 which extends upward along the axial direction (a) may be formed on the third lower cap member 2270. The third upward guide 2271 may include a 3-1 upward guide 2271a which fixes the radial direction (r) outer side of the post-treatment filter member 2060, and a 3-2 upward guide 2271b which fixes the radial direction (r) inner side of the post-treatment filter member 2060. That is, the post-treatment filter member 2060 is stably fixed through the third upward guide 2271 and the third downward guide 2261, thereby enhancing the durability of the water purifier.

In addition, as illustrated in FIGS. 11 and 12, in the water purifier having a composite filter according to another exemplary embodiment of the present invention, the third upper cap member 2260 may be disposed to be spaced apart at a certain distance from the lower surface of the second lower cap member 2240 such that the second purified water flow path (PC2) is formed to extend up to the periphery of the third upper cap member 2260. That is, while the third upper cap member 2260 is disposed to be spaced apart at a certain distance from the lower surface of the second lower cap member 2240, a second purified water flow path (PC2) is formed between the third upper cap member 2260 and the second lower cap member 2240 such that the second purified water (C2) flows smoothly, thereby securing the operational stability of the water purifier.

In this case, as illustrated in FIGS. 11 and 12, in the water purifier having a composite filter according to another exemplary embodiment of the present invention, the second lower cap member 2240 may include a second downward lower guide 2242 which is disposed to surround the outside of the second module 2200B. Such a second downward lower guide 2242 extends downward along the axial direction (a), and it is disposed to be spaced apart at a certain distance from the outer surface of the second module 2200B such that the second purified water flow path (PC2) is formed between the inner surface of the second downward lower guide 2242 and the outer surface of the second module 2200B. That is, in order to stack and arrange the first module 2200A and the second module 2200B, the second module 2200B is configured to be easily assembled by inserting the second module 2200B into the second downward lower guide 2242 formed on the second lower cap member 2240, thereby enhancing the workability and structural stability.

Moreover, as illustrated in FIGS. 13 to 15, in the water purifier having a composite filter according to another exemplary embodiment of the present invention, the third upper cap member 2260 includes at least two or more first support protrusions 2262 which are formed to protrude on the radial direction (r) outer side on the periphery of the outer peripheral surface, and the first support protrusions 2262 may be disposed to be spaced apart at equal intervals. As described above, the second downward lower guide 2242 is disposed to be spaced apart at a certain distance from the outer surface of the second module 2200B such that the second purified water flow path (PC2) is formed between the inner surface of the second downward lower guide 2242 and the outer surface of the second module 2200B, and while in this state, a first support protrusion 2262 is formed to stably fix the second downward lower guide 2242 and the second module 2200B, and as the first support protrusion 2262 is arranged to support the inner surface of the second downward lower guide 2242, the second purified water flow path (PC2) may be secured such that the second purified water (C2) flows through the periphery of the third upper cap member 2260, and since the first support protrusions are disposed at equal intervals, the second purified water (C2) may move evenly in the peripheral direction of the third upper cap member 2260, thereby enhancing the product reliability by improving the flow of the second purified water (C2). Meanwhile, an O-ring (OR) may be provided on the periphery of the outer peripheral surface of the third lower cap member 2270 to prevent the inflow of the raw water (W1) and the outflow of the second purified water (C2). A third purified water flow path (PC3) through which the third purified water (C3) flows may be formed in the center of the post-treatment filter member 2060.

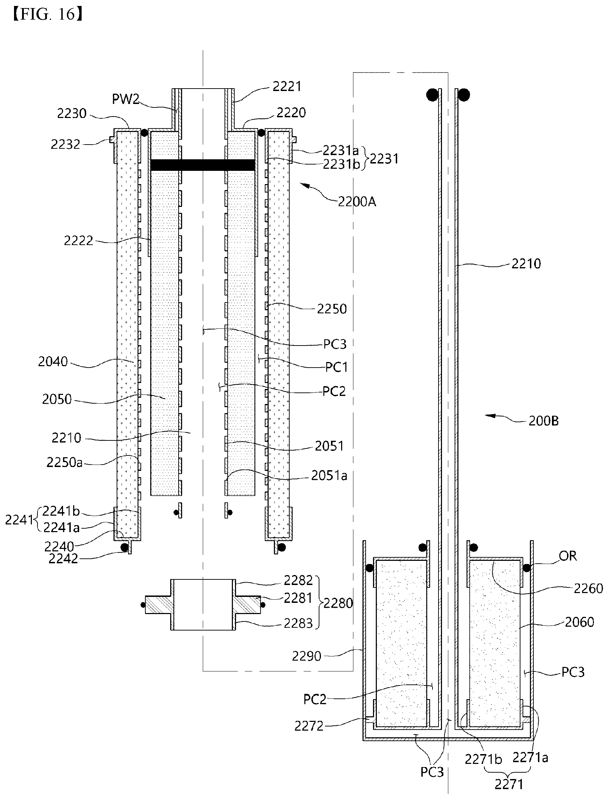

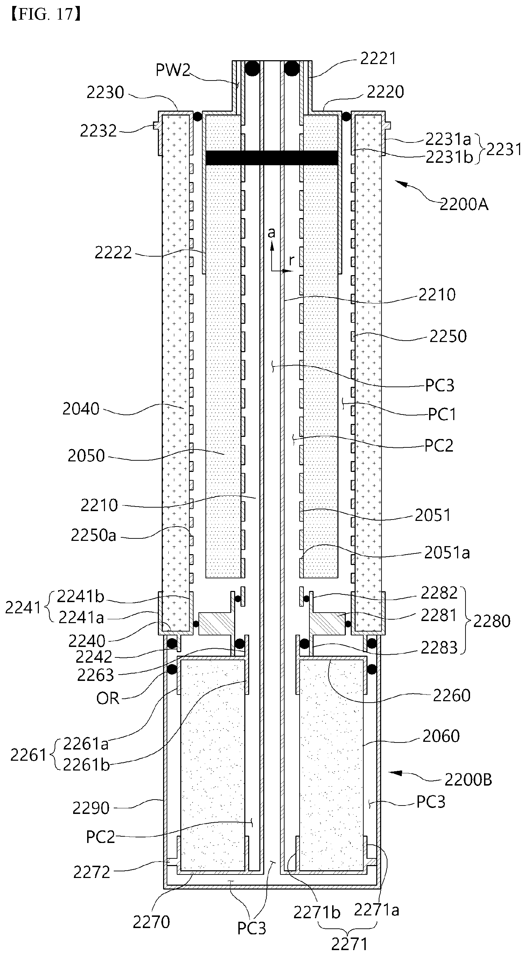

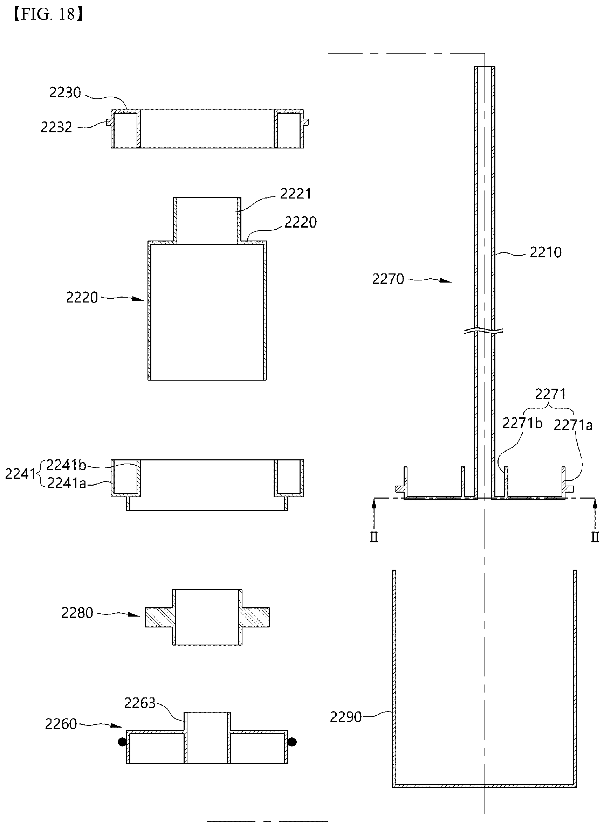

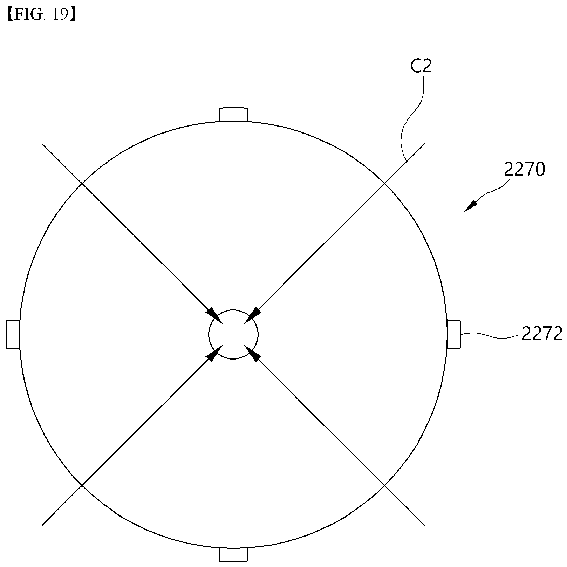

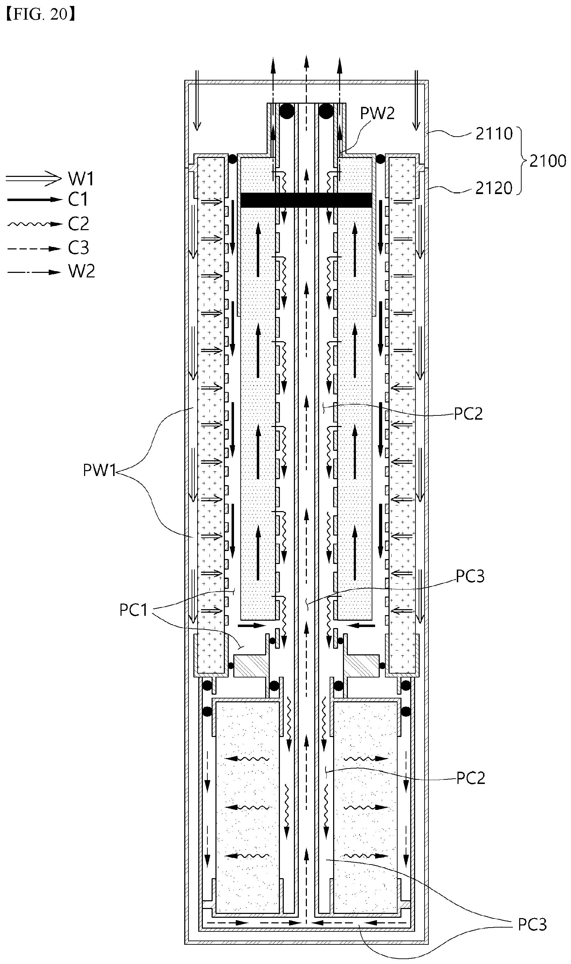

FIG. 16 is a cross-sectional view illustrating the disassembled state of a first module and a second module of the water purifier having a composite filter according to another exemplary embodiment of the present invention, FIG. 17 is a cross-sectional view illustrating the assembled state of a first module and a second module of the water purifier having a composite filter according to another exemplary embodiment of the present invention, FIG. 18 is a cross-sectional view illustrating a state in which the upper cap member and lower cap member of the water purifier having a composite filter according to another exemplary embodiment of the present invention are disassembled, FIG. 19 is a cross-sectional view of part II-II of FIG. 18, and FIG. 20 is a cross-sectional view illustrating a state in which a filtration unit of the water purifier having a composite filter according to another exemplary embodiment of the present invention is installed in a housing unit.

As illustrated in FIGS. 16 and 17, in the water purifier having a composite filter according to another exemplary embodiment of the present invention, the second module 2200B may include a third upper cap member 2260 and a third lower cap member 2270 on which the post-treatment filter member 2060 is fixedly disposed, and the discharge tube member 2210 may be disposed to extend upward from the third lower cap member 2270. That is, the sub-assembly of the second module 2200B is possible through the third upper cap member 2260 and the third lower cap member 2270, thereby enhancing the workability, and since the discharge tube member 2210 is disposed to extend upward from the third lower cap member 2270, the third purified water flow path (PC3) is stably formed in the process of stacking and arranging the first module 2200A and the second module 2200B, thereby securing the operational stability of the water purifier. In this case, a third downward guide 2261 which extends downward along the axial direction (a) may be formed on the third upper cap member 2260. The third downward guide 2261 may include a 3-1 downward guide 2261a which fixes the radial direction (r) outer side of the post-treatment filter member 2060, and a 3-2 downward guide 2261b which fixes the radial direction (r) inner side of the post-treatment filter member 2060. In addition, a third upward guide 2271 which extends upward along the axial direction (a) may be formed on the third lower cap member 2270. The third upward guide 2271 may include a 3-2 upward guide 2271a which fixes the radial direction (r) outer side of the post-treatment filter member 2060, and a 3-2 upward guide 2271b which fixes the radial direction (r) inner side of the post-treatment filter member 2060. That is, the post-treatment filter member 2060 is stably fixed through the third upward guide 2271 and the third downward guide 2261, thereby enhancing the durability of the water purifier.

In addition, as illustrated in FIGS. 16 and 17, in the water purifier having a composite filter according to another exemplary embodiment of the present invention, the discharge tube member 2210 may include a third upward upper guide 2263 which is disposed to penetrate the third upper cap member 2260, wherein the third upper cap member 2260 is disposed to be spaced at a certain distance from the discharge tube member 2210 to form the second purified water flow path (PC2). That is, since the third upward upper guide 2263 formed on the third upper cap member 2260 is disposed to be spaced apart at a certain distance from the discharge tube member 2210, the second purified water flow path (PC2) is formed between the third upward upper guide 2263 and the discharge tube member 2210 such that the second purified water (C2) flows smoothly, thereby enhancing the operational stability of the water purifier. Such a third upward upper guide 2263 is coupled to a connector member 2280, which will be described below, to improve structural stability, and a separate O-ring is provided on the outer peripheral surface of the third upward upper guide 2263 to prevent random leakage of the second purified water (C2), thereby securing the operational stability of the water purifier.

Moreover, as illustrated in FIGS. 16 and 17, the water purifier having a composite filter according to another exemplary embodiment of the present invention is provided with a connector member 2280 which couples the first module 2200A and the second module 2200B to each other, and the connector member 2280 may include a connector body 2281 which is press-fitted into the second lower cap member 2240, an upward rib 2282 which extends upward from the connector body 2281 to couple with the central tube 2051, and a downward rib 2283 which extends downward from the connector body 2281 to couple with the third upward upper guide 2263. That is, basically, while the connector body 2281 of the connector member 2280 is press-fitted into the inside of the second lower cap member 2240, the upward rib 2282 which extends upward from the connector body 2281 couples with the central tube 2051, and at the same time, the downward rib 2283 which extends downward from the connector body 2281 is coupled with the third upward upper guide 2263, and in this manner, the first module 2200A and the second module 2200B are simply coupled to each other, thereby enhancing the workability. Alternatively, while the connector member 2280 is first press-fitted into the second lower cap member 2240 provided in the first module 2200A, it is also possible to assemble the third upward upper guide 2263 of the second module 2200B by coupling with the downward rib 2283. In this case, O-rings for preventing the leakage of the first purified water (C1) and the second purified water (C2) may be provided on the outer peripheral surface of the connector body 2281 of the connector member 2280, the outer peripheral surface of the upward rib 2282 and the outer peripheral surface of the downward rib 2283.

Meanwhile, as illustrated in FIGS. 16 and 17, the water purifier having a composite filter according to another exemplary embodiment of the present invention may be provided with a cover lower cap 2290 which surrounds the outside of the second module 2200B, and the cover lower cap 2290 may be arranged to couple with the second downward lower guide 2242. That is, a cover lower cap 2290 which covers the outside of the second module 2200B may be provided to prevent the mixing of the raw water (W1) and the third purified water (C3), and such a cover lower cap 2290 is configured to be easily assembled in the manner of coupling to the second downward lower guide 2242 formed on the second lower cap member 2240, thereby enhancing the workability. In this case, it is preferable that the inner surface of the cover lower cap 2290 and the outer surface of the second module 2200B are disposed to be spaced apart from each other at a certain distance such that the third purified water flow path (PC3) is formed, and in this way, while the cover lower cap 2290 and the second module 2200B are disposed to be spaced apart at a certain distance, separate O-rings (OR) may be provided on the outer peripheral surface of the second downward lower guide 2242 and the outer peripheral surface of the third upper cap member 2260 in order to prevent the leakage of the third purified water (C3).

As illustrated in FIGS. 18 to 20, in the water purifier having a composite filter according to another exemplary embodiment of the present invention, the third lower cap member 2260 may include at least two or more second support protrusions 2272 which are formed to protrude on the radial direction (r) outer side on the periphery of the outer peripheral surface, and the second support protrusions 2272 may be disposed to be spaced apart from each other at equal intervals. That is, since the second support protrusions 2272 which are formed to protrude on the radial direction (r) outer side on the periphery of the outer peripheral surface of the third lower cap member 2270 are provided such that the third lower cap member 2270 supports the inner surface of the cover lower cap 2290, it is possible to secure a third purified water flow path (PC3) such that the third purified water (C3) flows through the periphery of the third lower cap member 2270, and since the second support protrusions 2272 are disposed at equal intervals, the third purified water (C3) may move evenly in the peripheral direction of the third lower cap member 2270, thereby enhancing the product reliability by improving the flow of the third purified water (C3). In this case, it is preferable that the third lower cap member 2270 is disposed to be spaced apart at a certain distance from the upper surface of the cover lower cap 2290 such that the third purified water flow path (PC3) extends.

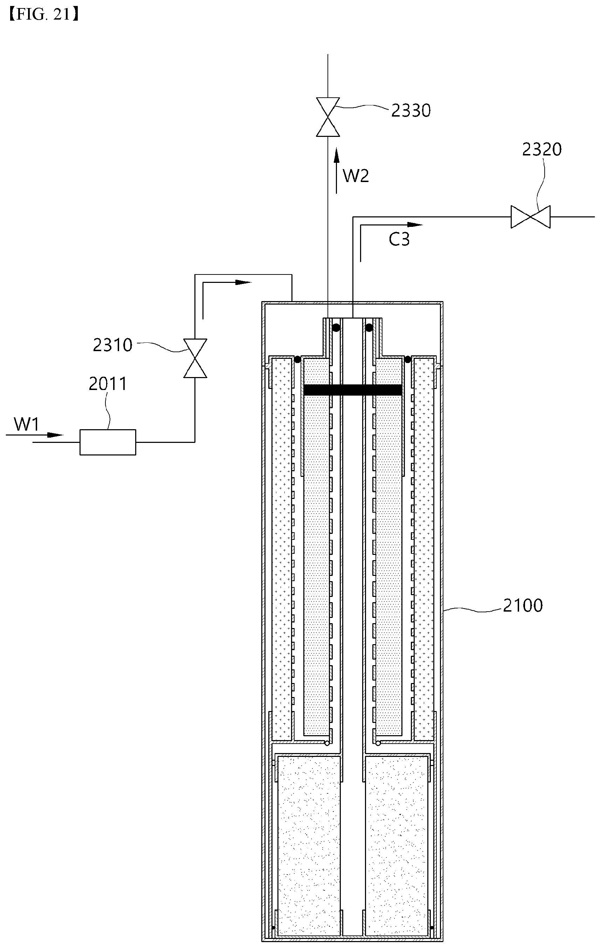

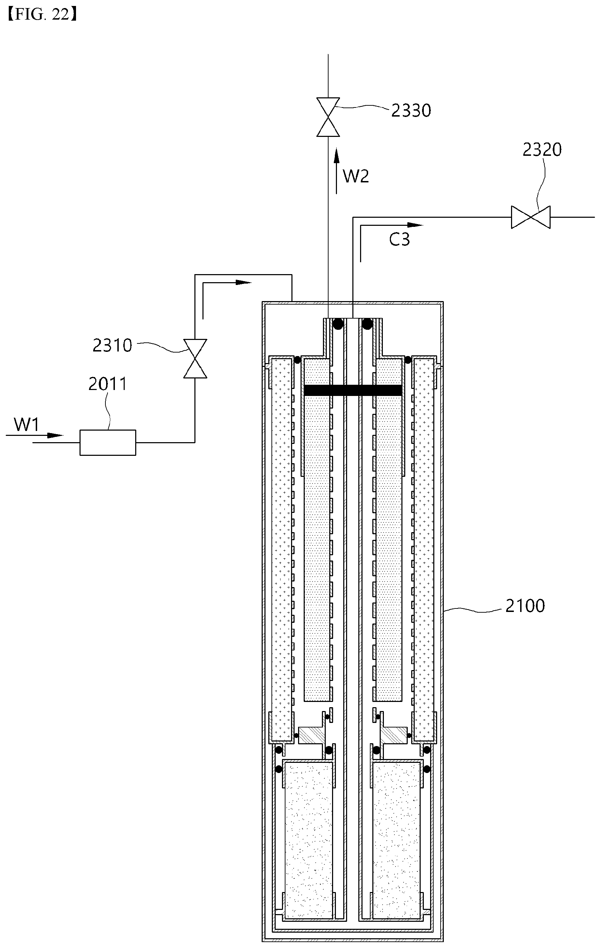

FIG. 21 is a configuration diagram illustrating the entire water piping diagram of the water purifier having a composite filter according to another exemplary embodiment of the present invention, and FIG. 22 is a configuration diagram illustrating the entire water piping diagram of the water purifier having a composite filter according to another exemplary embodiment of the present invention.

As illustrated in FIG. 21, the water purifier having a composite filter according to another exemplary embodiment of the present invention may further include a valve unit 2300 for regulating the flow of raw water (W1), purified water (C) and residential water (W2), and a control unit 2400 for controlling the operation of the valve unit 2300. Such a valve unit 2300 may include a first valve 2310 that regulates the flow of raw water (W1), a second valve 2320 that regulates the flow of third purified water (C3), and a third valve 2330 that regulates the flow of residential water (W2). In this case, the introduced raw water (W1) passes through a pressure reducing valve 2011 and moves in a reduced pressure state. That is, by controlling such a valve unit 2300 through the control unit 2400, it is possible to control the flow of the raw water (W1), the third purified water (C3) and the residential water (W2), and effectively prevent these fluids from flowing backward, thereby securing the product reliability.

In addition, as illustrated in FIG. 22, the water purifier having a composite filter according to another exemplary embodiment of the present invention may be provided with a valve unit 2300 for regulating the flow of raw water (W1), purified water (C) and residential water (W2), and a control unit 2400 for controlling the operation of the valve unit 2300, and such a valve unit 2300 may include a first valve 2310 that regulates the flow of the raw water (W1), a second valve 2320 that regulates the flow of the third purified water (C3) and a third valve 2330 that regulates the flow of the residential water (W2), and controls these valve units 2300 through the control unit 2400 to control the flows of the raw water (W1), the third purified water (C3) and the residential water (W2), thereby securing the product reliability by effectively preventing the reverse flow of these fluids.

As described above, the water purifier having a composite filter according to another exemplary embodiment of the present invention is capable of not only introducing raw water (W1) and discharging purified water (C) but also discharging residential water (W2), and accordingly, a composite filter is configured by integrating the reverse osmosis filter member 2050, and each filter is modularized through a first module 2200A which is provided with a pre-treatment filter member 2040 and a reverse osmosis filter member 2050, and a second module 2200B which is provided with a post-treatment filter member 2060, and the composite filter is configured in the manner of stacking and arranging the first module 2200A and the second module 2200B, thereby enhancing the manufacturability, and since the housing unit 2100 is provided with 3 filter elements, it is easy to miniaturize and replace the water purifier. In addition, since the discharge tube member 2210 is disposed to penetrate through the center of the first module 2200A such that the third purified water (C3) generated from the second module 2200B disposed at the lower part is discharged to the outside, the third water purifier (C3) is not mixed with the second water purifier (C2), thereby securing the operation stability of the water purifier. Moreover, since the head member 2110 of the housing portion 2100 is provided with first and second partition walls 111, 112 to form independent flow paths in which the raw water (W1), purified water (C) and residential water (W2) do not mix, the tubes through which the raw water (W1), purified water (C), and residential water (W2) flow are concentrated in the upper part of the composite filter, thereby improving the freedom of layout design in other parts.

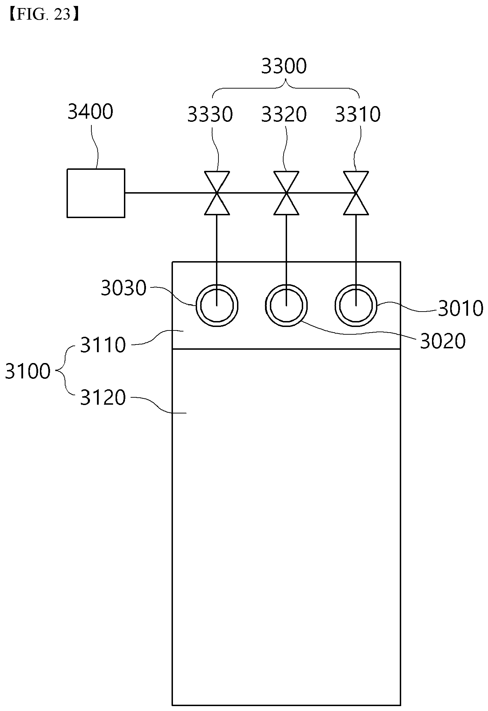

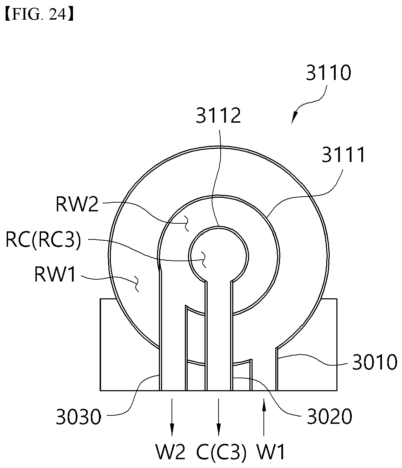

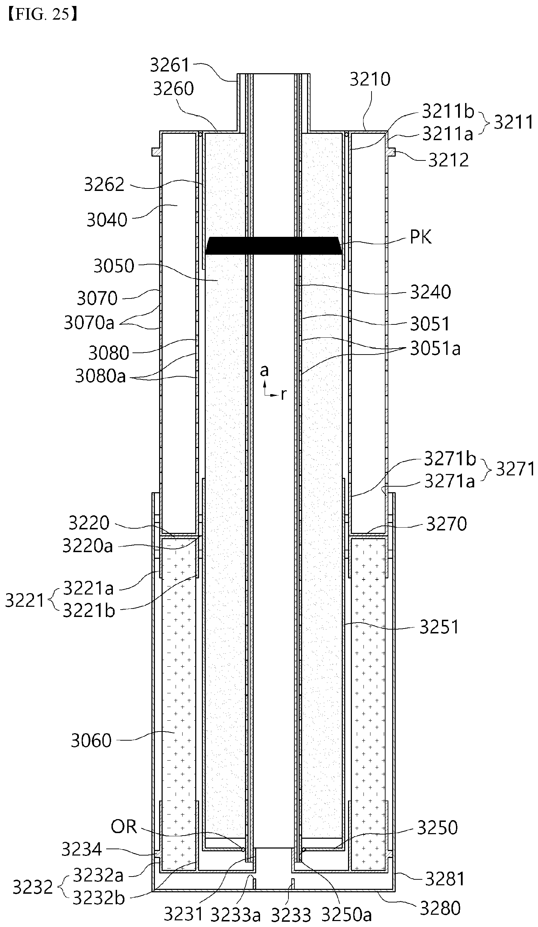

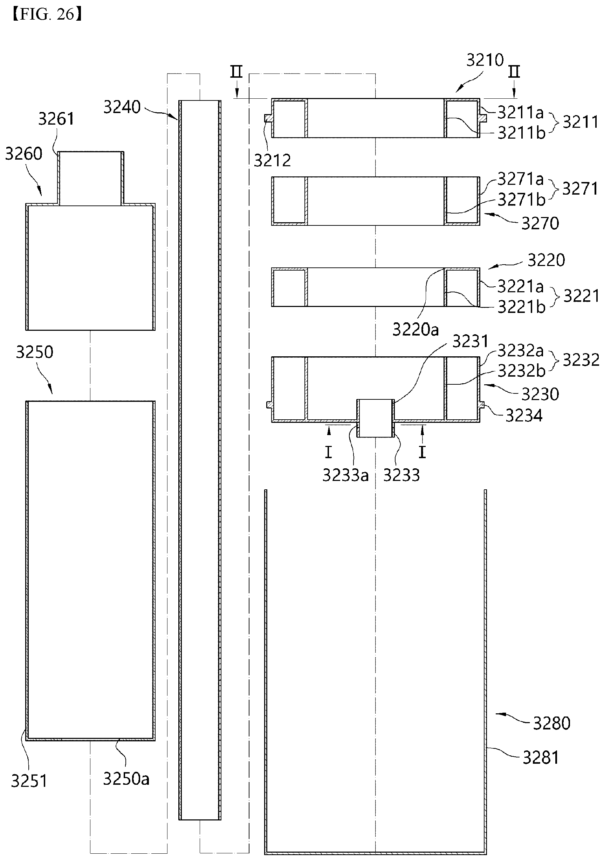

FIG. 23 is a configuration diagram showing a water purifier having a composite filter according to still another exemplary embodiment of the present invention, FIG. 24 is a plan view illustrating a head member of the water purifier having a composite filter according to still another exemplary embodiment of the present invention, FIG. 25 is a cross-sectional view illustrating the assembled state of a filtration unit of the water purifier having a composite filter according to still another exemplary embodiment of the present invention, and FIG. 26 is a cross-sectional view illustrating a disassembled state in which the upper cap member and lower cap member of the water purifier having a composite filter according to still another exemplary embodiment of the present invention are disassembled.

As illustrated in FIGS. 23 to 26, the water purifier having a composite filter according to the present invention may include a housing unit 3100 which is provided with a raw water intake port 3010 through which raw water (W1) is introduced, a purified water output port 3020 through which filtered purified water (C) is output and a residential water discharge port 3030 through which residential water (W2) generated during a filtration process is discharged, and a filtration unit 3200 which is provided with a pre-treatment filter member 3040 that filters raw water (W1) to generate first purified water (C1), a spiral-wound filter member (3050) that filters the first purified water (C1) to generate second purified water (C2), a post-treatment filter member 3060 that filters the second purified water (C2) to generate the third purified water (C3), and is arranged to be stacked at the lower part of the pre-treatment filter member 3040. That is, the raw water (W1) introduced through the raw water intake port 3010 moves to the filtration unit 3200 through the raw water flow path (PW1) and then is filtered by sequentially passing through the pre-treatment filter member 3040, the spiral-wound filter member 3050 and the post-treatment filter member 3060 that are provided in the filtration unit 3200, and the finally filtered third purified water (C3) may be discharged through the purified water output port 3020 and then provided to the user. Alternatively, it may be stored in a separate purified water storage unit or supplied to a cold water generating unit, a hot water generating unit and an ice generating unit for generating cold water, hot water and ice. In addition, the first purified water (C1) moves to the lower side of the spiral-wound filter member 3050 through the first purified water flow path (PC1) formed between the pre-treatment filter member 3040 and the spiral-wound filter member 3050, and then moves to the inside of the spiral-wound filter member 3050, and the residential water (W2) generated as the first purified water (C1) is filtered in the spiral-wound filter member 3050 moves to the residential water flow path (PW2), and after it is discharged to the outside of the housing unit 3100 through the residential water discharge port 3300, it may be discharged to the outside of the water purifier through a separate tube. In this way, by configuring to enable raw water (W1) intake and purified water (C) output as well as residential water (W2) discharge, it is possible to configure a composite filter by integrating the spiral-wound filter member 3050, thereby enhancing the user convenience. In this case, the pre-treatment filter member 3040 may be a pre-carbon filter or a microfiltration (MF) filter, and the post-treatment filter member 3060 may be a post-carbon filter or a microfiltration (MF) filter. Alternatively, the pre-treatment filter member 3040 and the post-treatment filter member 3060 may include an electrodeionization-type filter. Electric deionization methods include EDI (Electro Deionization), CEDI (Continuous Electro Deionization), CDI (Capacitive Deionization) and the like. In this case, a separate filter member may be provided on the outer surface of the pretreatment filter member 3040. As an example, such a filter element may be an NT filter element. Such an NT filter member may be made of a material with static electricity, such as a nano trap material, to adsorb foreign substances included in the introduced raw water (W1). This material may be configured to carry a positive charge. Accordingly, negatively charged foreign substances such as viruses, bacteria and fine particles that are included in the raw water (W1) may be adsorbed to the NT filter member due to static electricity. In addition, such a filter member may be a sediment filter member. The spiral-wound filter member 3050 may be a reverse osmosis filter or hollow fiber membrane filter.

As illustrated in FIG. 24, the housing unit 3100 includes a head member 3110 which is provided with a first partition wall 3111 for preventing raw water (W1) and residential water (W2) from mixing and a second partition wall 3112 for preventing the third purified water (C3) and residential water (W2) from mixing, and a body member 3120 which extends from the head member 3110 and in which the filtration unit 3200 is disposed therein. That is, it is a structure in which not only the incoming raw water (W1), but also the discharged third purified water (C3) and discharged residential water (W2) are output/discharged through the upper part of the composite filter, and to this end, a raw water area (RW1) where the raw water (W1) is introduced, a third purified water area (RC3) where the third purified water (C3) is discharged, and a residential water area (RW2) where the residential water (W2) is discharged are formed in the head member 3110. To this end, since the head member 3110 of the housing portion 3100 is provided with the above-described first and second partition walls 3111, 3112 such that independent flow paths in which the raw water (W1), third purified water (C3) and residential water (W2) do not mix are formed, the tubes through which the raw water (W1), third purified water (C3) and residential water (W2) flow are concentrated in the upper part of the composite filter, thereby enhancing the freedom of layout design of other parts.

As illustrated in FIGS. 25 and 26, the filtration unit 3200 includes a first upper cap member 3210 in which the pre-treatment filter member 3040 disposed on the radial direction (r) outer side and the spiral-wound filter member 3050 disposed on the radial direction (r) inner side are disposed at the lower part, and a second upper cap member 3220 in which the post-treatment filter member 3060 disposed on the radial direction (r) outer side is disposed at the lower part, and through which the spiral-wound filter member 3050 disposed on the radial direction (r) inner side is disposed to penetrate. While the post-treatment filter member 3060 is arranged to be stacked at the lower part of the above pre-treatment filter member 3040, a first through-hole 3220a through which the spiral-wound filter member 3050 penetrates may be formed in the second upper cap member 3220 that fixes the post-treatment filter member 3060. In addition, a first downward support guide 3211 which extends downward along the axial direction (a) may be formed on the first upper cap member 3210. The first downward support guide 3211 may include a 1-1 downward support guide 3211a which is disposed on the radial direction (r) outer side to fix the pre-treatment filter member 3040, and a 1-2 downward support guide 3211b which is disposed on the radial direction (r) inner side. Moreover, a second downward support guide 3221 which extends downward along the axial direction (a) may also be formed in the second upper cap member 3220. The second downward support guide 3221 may include a 2-1 downward support guide 3221a which is disposed on the radial direction (r) outer side to secure the post-treatment filter member 3060, and a 2-2 downward support guide 3221b which is disposed on the radial direction (r) inner side. In this way, when the first downward support guide 3211 and the second downward support guide 3221 are formed, the pre-treatment filter member 3040 and the post-treatment filter member 3060 are stably fixed, thereby enhancing the durability of the water purifier. That is, in the filtration unit 3200, the pre-treatment filter member 3040 and the post-treatment filter member 3060 are arranged to be stacked through the first upper cap member 3210 and the second upper cap member 3220, and by arranging the spiral-wound filter member 3050 on the radial direction (r) inner side of these filter members, it is configured to manufacture a composite filter by utilizing a previously manufactured spiral-wound filter member 3050, thereby enhancing the manufacturability. If the spiral-wound filter member 3050 is newly manufactured, the same filtration performance may be secured by increasing the length in the axial direction (a), even when it is manufactured with a thinner thickness, and at the same time, the slimming of the composite filter is possible.

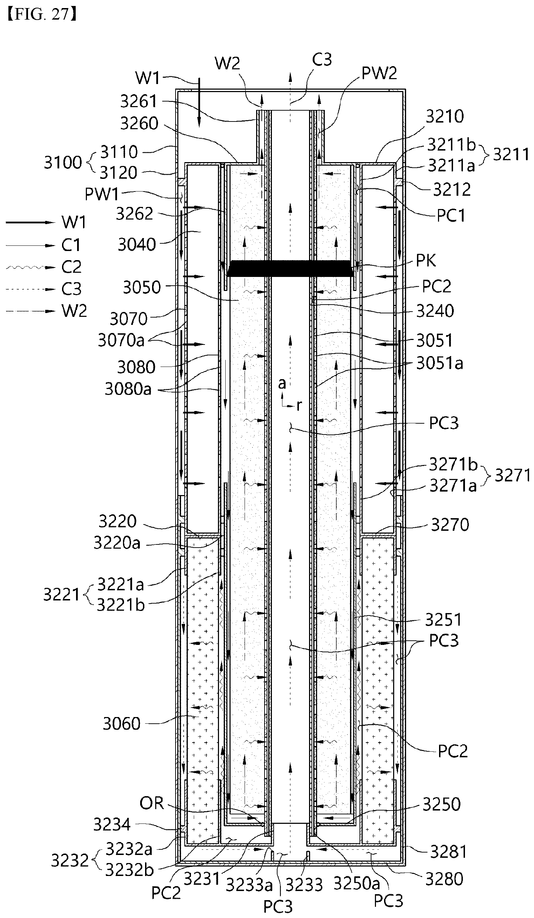

FIG. 27 is a cross-sectional view illustrating a state in which a filtration unit of the water purifier having a composite filter according to still another exemplary embodiment of the present invention is installed in a housing unit.

As illustrated in FIGS. 25 and 26, in the water purifier having a composite filter according to another exemplary embodiment of the present invention, the filtration unit 3200 may include a second lower cap member 3230 on which the post-treatment filter member 3060 and the spiral-wound filter member 3050 are fixedly disposed at the upper part, and a connecting pipe member 3240 which is disposed on the radial direction (r) inner side of the spiral-wound filter member 3050 to prevent the second purified water (C2) and the third purified water (C3) from mixing. As illustrated in FIG. 27, since a third purified water flow path (PC3) is formed inside such a connecting pipe member 3240, it flows stably without being mixed with the second purified water (C2) flowing inside the spiral-wound filter member 3050, that is, through a central tube 3051, which will be described below. That is, the filtration unit 3200 is provided with a second lower cap member 3230 that fixes the post-treatment filter member 3060 and the spiral-wound filter member 3050, thereby enhancing the structural stability of the composite filter. In addition, the connecting pipe member 3240 is provided on the radial direction (r) inner side of the spiral-wound filter member 3050 to prevent the discharged third purified water (C3) from mixing with the second purified water (C2), thereby enhancing the user satisfaction by improving the water quality of the finally discharged third purified water (C3).

In this case, as illustrated in FIGS. 25 and 26, in the water purifier having a composite filter according to another exemplary embodiment of the present invention, the second lower cap member 3230 may include a pipe support guide 3231 which is arranged to extend upward to couple with the connecting pipe member 3240. That is, the second lower cap member 3230 and the connecting pipe member 3240 are stably coupled by the pipe support guide 3231, thereby improving the structural stability of the composite filter, and the discharged third purified water (C3) flows stably, thereby enhancing the operational stability of the water purifier.

In addition, as illustrated in FIGS. 25 and 26, in the water purifier having a composite filter according to still another exemplary embodiment of the present invention, the spiral-wound filter member 3050 may include a central tube 3051 which supports the spiral-wound filter member 3050 to be wound in a spiral shape and has a second purified water through-hole 3051a such that the second purified water (C2) flows therein. In this case, as illustrated in FIG. 27, the connecting pipe member 3240 may be disposed to penetrate through the center of the central tube 3051, and may be disposed to be spaced apart at a certain distance such that a second purified water flow path (PC2) through which the second purified water (C2) flows is formed between the central tube 3051 and the connecting pipe member 3240. That is, the spiral-wound filter member 3050 is disposed in the central tube 3051 while being wound in a spiral shape, and a second purified water through-hole 3051a is formed such that the second purified water (C2) flows into the second purified water flow path (PC2) provided therein, and the connecting pipe member 3240 which is penetrated and inserted through the center of the central tube 3051 is disposed to be spaced apart at a certain distance from the central tube 3051 to stably maintain the second water purification flow path (PC2), thereby enhancing the operational stability of the water purifier through the smooth flow of the second purified water (C2).

In this case, as illustrated in FIGS. 25 and 26, in the water purifier having a composite filter according to still another exemplary embodiment of the present invention, the filtration unit 3200 may include a third lower cap member 3250 which is disposed at the lower part of the spiral-wound filter member 3050 and has a central tube 3051 disposed to penetrate therethrough such that the second purified water (C2) moves to the lower part. That is, while the third lower cap member 3250 is disposed at the lower part of the spiral-wound filter member 3050, the central tube 3051 is disposed to penetrate the third lower cap member 3250, and thus, even if the first purified water (C1) flows through the upper part of the third lower cap member 3250, it does not mix with the second purified water (C2) flowing through the lower part of the third lower cap member 3250, thereby enhancing the user satisfaction by preventing the deterioration of water quality and improving the water quality of the finally discharged third purified water (C3).

In this case, as illustrated in FIGS. 25 and 26, in the water purifier having a composite filter according to still another exemplary embodiment of the present invention, the third lower cap member 3250 may include a second through-hole 3250a through which the central tube 3051 is disposed to penetrate. That is, since the central tube 3051 is arranged to penetrate the second through-hole 3250a formed in the third lower cap member 3250, the penetrating state of the central tube 3051 is stably maintained, thereby enhancing the structural stability of the composite filter, and the second purified (C2) moves smoothly to the lower part of the third lower cap member 3250 through the penetrating part of the central tube 3051, thereby securing the operational reliability of the water purifier.

In addition, as illustrated in FIGS. 25 and 26, in the water purifier having a composite filter according to still another exemplary embodiment of the present invention, the third lower cap member 3250 may include a third upward support guide 3251 which is disposed to extend upward to be disposed between the spiral-wound filter member 3050 and the post-treatment filter member 3060. That is, since the third upward support guide 3251 is disposed between the spiral-wound filter member 3050 and the post-treatment filter member 3060, it is possible to improve the user satisfaction by preventing the deterioration of the water quality of the second purified water (C2) and improving the water quality of the finally discharged third purified water (C3).

Meanwhile, as illustrated in FIGS. 25 and 26, in the water purifier having a composite filter according to still another exemplary embodiment of the present invention, the second lower cap member 3230 may include a second upward support guide 3232 which is disposed to extend upward such that the post-treatment filter member 3060 is fixedly positioned. Such a second upward support guide 3232 may be formed to extend upward along the axial direction (a). The second upward support guide 3232 may include a 2-1 upward support guide 3232a which is disposed on the radial direction (r) outer side so as to fix the post-treatment filter member 3060, and a 2-2 upward support guide 3232b which is disposed on the radial direction (r) inner side. When the second upward support guide 3232 is formed in this way, the post-treatment filter member 3060 is stably fixed, thereby enhancing the structural stability of the composite filter.

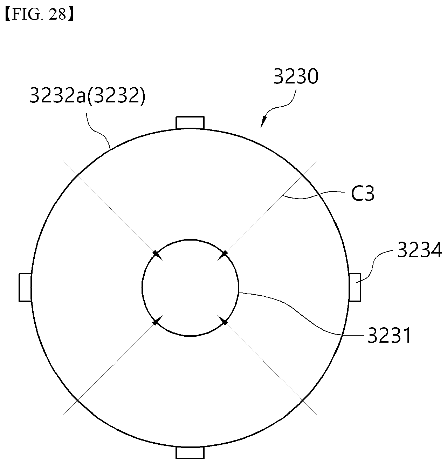

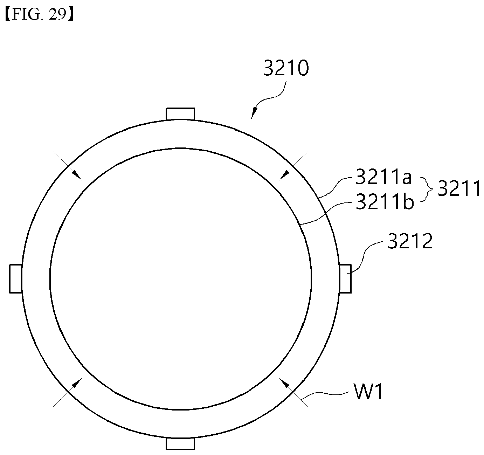

FIG. 28 is a cross-sectional view of part I-I of FIG. 26, and FIG. 29 is a cross-sectional view of part II-II of FIG. 26.

In addition, as illustrated in FIGS. 25 and 26, in the water purifier having a composite filter according to still another exemplary embodiment of the present invention, the second lower cap member 3230 may include a second downward guide 3233 which extends downward, and the second downward guide 3233 may include a third through-hole 3233a through which the third purified water (C3) which is moved to the lower part of the second lower cap member 3230 flows. In this case, after the third purified water (C3) filtered while passing through the post-treatment filter member 3060 moves to the lower part of the second lower cap member 3230 through the periphery of the second lower cap member 3230, it moves inward to the radial direction (r) inner side and is discharged to the outside through the connecting pipe member 3240. As illustrated in FIG. 28, a second support protrusion 3234 which is formed to extend on the radial direction (r) outer side is formed on such a second lower cap member 3230, and a plurality of second support protrusions 3234 are configured to support the inner surface of the fourth lower cap member 3280, which will be described below, while being disposed to be spaced apart from each other, thereby enhancing the structural stability of the composite filter, and at the same time, the third purified water (C3) flows smoothly. That is, since the second downward guide 3233 supports the lower surface of the fourth lower cap member 3280, the separation state between the second lower cap member 3230 and the lower surface of the fourth lower cap member 3280 is maintained stably, and the third purified water (C3) which moves to the lower part of the second lower cap member 3230 moves smoothly through the third through-hole 3233a formed in the second downward guide 3233, thereby securing the operational stability of the water purifier.

Moreover, as illustrated in FIGS. 25 and 26, in the water purifier having a composite filter according to still another exemplary embodiment of the present invention, the filtration unit 3200 may include a third upper cap member 3260 which is arranged to be stacked with the first upper cap member 3210 such that the spiral-wound filter member 3050 is fixedly disposed at the lower part. That is, the spiral-wound filter member 3050 is stably fixed through the third upper cap member 3260, thereby enhancing the structural stability of the composite filter. In addition, the spiral-wound filter member 3050 is sub-assembled through the third upper cap member 3260 and the third lower cap member 3250, thereby enhancing workability.

In this case, as illustrated in FIGS. 25 and 26, in the water purifier having a composite filter according to still another exemplary embodiment of the present invention, the third upper cap member 3260 may include a third upward guide 3261 which is arranged to extend upward such that the residential water (W2) which is moved to the upper end of the spiral-wound filter member 3050 is discharged to the outside. That is, since the residential water (W2) which is moved to the upper end of the spiral-wound filter member 3050 moves through the third upward guide 3261 and is discharged to the outside, the discharge is stably performed, thereby securing the operational stability of the water purifier. In addition, the third upper cap member 3260 may be provided with a third downward support guide 3262 which is arranged to extend downward along the axial direction (a) to surround the spiral-wound filter member 3050, and the spiral-wound filter member 3050 may be provided with a separate packing (PK) that is supported by the third downward support guide 3262.

In this case, as illustrated in FIGS. 25 and 26, in the water purifier having a composite filter according to still another exemplary embodiment of the present invention, the first partition wall 3111 may be arranged to extend in the axial direction (a) along the third upward guide 3261. Such a first partition wall 3111 may be formed to extend in the axial direction (a) along the third upward guide 3261, and when the head member 3110 and the body member 3120 are coupled to each other, the first partition wall 3111 may be coupled in a way that covers the outer surface of the third upward guide 3261, the first partition wall 3111 may be coupled in a way that it is inserted into the inner surface of the third upward guide 3261, or the first partition wall 3111 may be coupled in a way that it is seated on the upper end of the third upward guide 3261. In addition, the third upward guide 3261 is disposed to be spaced apart at a certain distance from the central tube 3051 such that the residential water (W2) flows smoothly. That is, since the first partition wall 3111 is disposed to extend in the axial direction (a) along the third upward guide 3261, it effectively prevents the discharged residential water (W2) from mixing with incoming raw water (W1), thereby enhancing the user satisfaction by improving the water quality of the finally discharged third purified water (C3).

Meanwhile, as illustrated in FIGS. 25 and 26, in the water purifier having a composite filter according to still another exemplary embodiment of the present invention, the second partition wall 3112 may be disposed to extend along the connecting pipe member 3240 in the axial direction (a). Such a second partition wall 3112 may be formed to extend in the axial direction (a) along the connecting pipe member 3240, and when the head member 3110 and the body member 3120 are coupled to each other, the second partition wall 3112 may be coupled in a way that covers the outer surface of the connecting pipe member 3240, the second partition wall 3112 may be coupled in a way that it is inserted into the inner surface of the connecting pipe member 3240, or the second partition wall 3112 may be coupled in a way that the second partition wall 3112 is seated on the upper end of the connecting pipe member 3240. That is, since the second partition wall 3112 is disposed to extend in the axial direction (a) along the connecting pipe member 3240, it effectively prevents the discharged third purified water (C3) from mixing with the discharged residential water (W2), thereby enhancing the user satisfaction by improving the water quality of the finally discharged third purified water (C3).

In addition, as illustrated in FIGS. 25 and 26, in the water purifier having a composite filter according to still another exemplary embodiment of the present invention, the filtration unit 3200 may include a first lower cap member 3270 which is arranged to be stacked with the second upper cap member 3220 such that the pre-treatment filter member 3040 is fixedly disposed at the upper end. Such a first lower cap member 3270 may be formed with a first upward support guide 3271 which is formed to extend upward along the axial direction (a). The first upward support guide 3271 may include a 1-1 upward support guide 3271a which is disposed on the radial direction (r) outer side to fix the pre-treatment filter member 3040, and a 1-2 upward support guide 3271b which is disposed on the radial direction (r) inner side. When the first upward support guide 3271 is formed in this way, the pre-treatment filter member 3040 is stably fixed, thereby enhancing the durability of the water purifier. That is, since the pre-treatment filter member 3040 may be fixed by respectively arranging the first upper cap member 3210 and the first lower cap member 3270 on the upper part and lower part of the pre-treatment filter member 3040, the modularization of the composite filter is possible through the sub-assembly process, thereby enhancing the workability, and since the first lower cap member 3270 and the second upper cap member 3220 are arranged to be stacked, the stacking state of the pre-treatment filter member 3040 and the post-treatment filter member 3060 is stably maintained, thereby enhancing the structural stability of the composite filter.

In this case, as illustrated in FIGS. 25 and 26, in the water purifier having a composite filter according to still another exemplary embodiment of the present invention, a first connection tube 3070 may be provided on the radial direction (r) outer side to connect the first upper cap member 3210 and the first lower cap member 3270, and a raw water through-hole 3070a through which the raw water (W1) flows may be formed in the first connection tube 3070. That is, the first upper cap member 3210 and the first lower cap member 3270 are stably connected through such a first connection tube 3070, thereby enhancing the structural stability of the composite filter, and the raw water (W1) flows smoothly through the raw water through-hole 3070a formed in the first connection tube 3070, thereby securing the operational stability of the water purifier. Such a first connection tube 3070 supports the outer surface of the pre-treatment filter member 3040 for the structural stability of the pre-treatment filter member 3040, and it may be integrally formed with the pre-treatment filter member 3040, but the present invention is not necessarily limited thereto, and while the first upper cap member 3210 and the first lower cap member 3270 are integrally formed, it is also possible to configure the pre-treatment filter member 3040 to be disposed on the radial direction (r) inner side.

In addition, as illustrated in FIGS. 25 and 26, in the water purifier having a composite filter according to still another exemplary embodiment of the present invention, a second connection tube 3080 may be provided on the radial direction (r) inner side to connect the first upper cap member 3210 and the first lower cap member 3270, and a first purified water through-hole 3080a through which the first purified water (C1) flows may be formed in the second connection tube 3080. That is, the first upper cap member 3210 and the first lower cap member 3270 are stably connected through the second connection tube 3080, thereby enhancing the structural stability of the composite filter, and the first purified water (C1) flows smoothly through the first purified water through-hole 3080a formed in the second connection tube 3080, thereby securing the operational stability of the water purifier. Such a second connection tube 3080 supports the inner surface of the pre-treatment filter member 3040 for the structural stability of the pre-treatment filter member 3040, and it may be integrally formed with the pre-treatment filter member 3040, but the present invention is not necessarily limited thereto, and while the first upper cap member 3210 and the first lower cap member 3270 are integrally formed, it is also possible to configure the pre-treatment filter member 3040 to be disposed on the radial direction (r) outer side.

Meanwhile, as illustrated in FIGS. 25 and 26, in the water purifier having a composite filter according to still another exemplary embodiment of the present invention, the filtration unit 3200 may include a fourth lower cap member 3280 which supports the second lower cap member 3230 such that it is disposed to be spaced apart from the upper surface, and the fourth lower cap member 3280 may include a fourth upward support guide 3281 which is disposed to extend upward to simultaneously surround the second upper cap member 3220 and the second lower cap member 3230. That is, since the fourth lower cap member 3280 is disposed to be spaced apart from the lower surface of the second lower cap member 3230, the third purified water (C3) flows smoothly, and since the fourth upward support guide 3281 is disposed to simultaneously surround the second upper cap member 3220 and the second lower cap member 3230, it prevents the random outflow of the third purified water (C3) and the random inflow of the raw water (W1), thereby securing the operational stability of the water purifier. In this case, it is also possible to form the third purified water flow path (PC3) by using the body member 3120 of the housing unit 3100 without using the fourth lower cap member 3280. In this case, it is preferable that a first support protrusion 3212 is formed on the periphery of the first upper cap member 3210 on the radial direction (r) outer side.

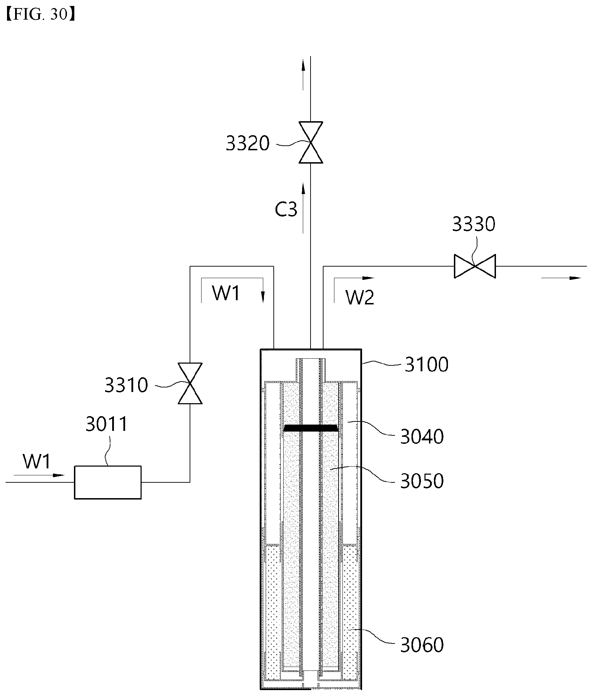

FIG. 30 is a configuration diagram illustrating the entire water piping diagram of the water purifier having a composite filter according to still another exemplary embodiment of the present invention.

Meanwhile, as illustrated in FIG. 30, the water purifier having a composite filter according to still another exemplary embodiment of the present invention may further include a valve unit 33200 for regulating the flow of raw water (W1), purified water (C) and residential water (W2), and a control unit 3400 for controlling the operation of the valve unit 3300. Such a valve unit 3300 may include a first valve 3310 that regulates the flow of raw water (W1), a second valve 3320 that regulates the flow of third purified water (C3), and a third valve 3300 that regulates the flow of residential water (W2). In this case, the introduced raw water (W1) passes through a pressure reducing valve 3011 and moves in a state of reduced pressure. That is, the flow of raw water (W1), third purified water (C3) and residential water (W2) may be controlled by controlling the valve unit 3300 through the control unit 3400, and it is possible to effectively prevent these fluids from flowing back, thereby enhancing the product reliability.

As described above, the water purifier having a composite filter according to still another exemplary embodiment of the present invention is capable of raw water (W1) inflow and third purified water (C3) output, as well as residential water (W2) discharge, and accordingly, a composite filter is configured by integrating a spiral-wound filter member 3050, thereby enhancing the user convenience. In addition, since the head member 3110 of the housing unit 3100 is provided with first and second partition walls 3111, 3112 such that independent flow paths in which raw water (W1), third purified water (C3) and residential water (W2) do not mix are formed, the tubes through which the raw water (W1), third purified water (C3) and residential water (W2) flow are concentrated in the upper part of the composite filter, thereby improving the freedom of design layout of other parts. Additionally, in the filtration unit 3200, a pre-treatment filter member 3040 and a post-treatment filter member 3060 are arranged to be stacked through the first upper cap member 3210 and the second upper cap member 3220, and the spiral-wound filter member 3050 are disposed on the radial direction (r) inner side of these filter members such that it is configured to manufacture a composite filter by utilizing a previously manufactured spiral-wound filter member 3050, thereby enhancing the manufacturability.

Although one exemplary embodiment of the present invention has been described above, the spirit of the present invention is not limited to the exemplary embodiments presented in the present specification, and those skilled in the art who understand the spirit of the present invention will be able to easily propose other exemplary embodiments by supplementing, changing, deleting or adding components within the scope of the same spirit, but it will be said that these are also within the scope of the spirit of the present invention.

## Claims

1. A water purifier having a composite filter, comprising:
a housing unit which is provided with a raw water intake port through which raw water is introduced, a purified water output port through which filtered purified water is output, and a residential water discharge port through which residential water generated during a filtration process is discharged; and
a filtration unit which is disposed inside the housing unit and is provided with a pre-treatment filter member for filtering the raw water to generate first purified water, a reverse osmosis filter member for filtering the first purified water to generate second purified water, and a post-treatment filter member for filtering the second purified water to generate third purified water,
wherein the housing unit comprises a head member which is provided with a first partition wall for preventing the raw water and the residential water from mixing and a second partition wall for preventing the residential water and the purified water from mixing, and a body member which extends from the head member and in which the filtration unit is disposed therein,
wherein the filtration unit comprises a first module in which the pre-treatment filter member and the reverse osmosis filter member are sequentially provided therein, a second module which is disposed at an upper part of the first module and in which the post-treatment filter member is provided therein, and a guide member which is arranged to surround the outside of the second module such that the raw water introduced through an upper part of the housing unit moves to the first module while bypassing the second module, and
wherein a residential water flow path through which the residential water discharged to the outside of the first module moves is provided inside the guide member.

2. The water purifier of claim 1, wherein the guide member comprises a guide lower cap which is arranged to surround the second module, and a guide upper cap which is disposed outside the guide lower cap, and
wherein the residential water flow path through which the residential water discharged to the outside of the first module flows is provided between the guide lower cap and the guide upper cap.

3. The water purifier of claim 2, wherein the guide upper cap comprises an upward upper guide which extends upward so as to form the residential water flow path, and
wherein the first partition wall is arranged to extend in the axial direction along the upward upper guide.

4. The water purifier of claim 2, wherein the first module comprises a first upper cap member in which the reverse osmosis filter member is fixedly disposed at a lower part and is provided with a first through-hole such that the residential water is discharged to the outside of the first module.

5. The water purifier of claim 2, wherein the first module comprises a second upper cap member in which the pre-treatment filter member is fixedly disposed at a lower part, and through which the reverse osmosis filter member is disposed to penetrate at the same time, and
wherein the guide upper cap is arranged to extend up to the second upper cap member.

6. The water purifier of claim 2, wherein the first module comprises a central tube which supports the reverse osmosis filter member to be wound in a spiral shape, and in which a second through-hole is formed so as to allow the second purified water to flow therein, and
wherein the central tube is disposed to penetrate through the center of the guide lower cap such that the second purified water flows toward the second module.

7. The water purifier of claim 1, further comprising:
a valve unit for regulating the flow of the raw water, the purified water and the residential water, and a control unit for controlling the operation of the valve unit.

8. A water purifier having a composite filter, comprising:
a housing unit which is provided with a raw water intake port through which raw water is introduced, a purified water output port through which filtered purified water is output, and a residential water discharge port through which residential water generated during a filtration process is discharged; and
a filtration unit which is disposed inside the housing unit and is provided with a pre-treatment filter member for filtering the raw water to generate first purified water, a reverse osmosis filter member for filtering the first purified water to generate second purified water, and a post-treatment filter member for filtering the second purified water to generate third purified water,
wherein the housing unit comprises a head member which is provided with a first partition wall for preventing the raw water and the residential water from mixing and a second partition wall for preventing the residential water and the purified water from mixing, and a body member which extends from the head member and in which the filtration unit is disposed therein,
wherein the filtration unit comprises a first module in which the pre-treatment filter member and the reverse osmosis filter member are sequentially provided therein, and a second module which is disposed at a lower part of the first module and in which the post-treatment filter member is provided therein, and
wherein the second module comprises a discharge tube member which is disposed to penetrate through the center of the first module such that the third purified water is output to the outside.

9. The water purifier of claim 8, wherein the first module comprises a central tube which supports the reverse osmosis filter member to be wound in a spiral shape, and in which a first through-hole is formed to allow the second purified water to flow therein, and
wherein the discharge tube member is disposed to penetrate through the center of the central tube, and is disposed to be spaced apart at a certain distance such that a second purified water flow path through which second purified water flows is formed between the central tube and the discharge tube member.

10. The water purifier of claim 9, wherein the second partition wall is arranged to extend in the axial direction along the discharge tube member.

11. The water purifier of claim 9, wherein the first module comprises a first upper cap member in which the reverse osmosis filter member is disposed at a lower part, and
wherein the first upper cap member comprises a first upward guide which is disposed to be spaced apart at a certain distance from the central tube so as to form a residential water flow path through which the residential water is discharged.

12. The water purifier of claim 11, wherein the first partition wall is arranged to extend in the axial direction along the first upward guide.

13. The water purifier of claim 11, wherein the first module comprises a second upper cap member and a second lower cap member on which the pre-treatment filter member is fixedly disposed, and
wherein the first upward guide is disposed to penetrate the second upper cap member.

14. A water purifier having a composite filter, comprising:
a housing unit which is provided with a raw water intake port through which raw water is introduced, a purified water output port through which filtered purified water is output, and a residential water discharge port through which residential water generated during a filtration process is discharged; and
a filtration unit which is provided with a pre-treatment filter member for filtering the raw water to generate first purified water, a spiral-wound filter member for filtering the first purified water to generate second purified water, and a post-treatment filter member which filters the second purified water to generate third purified water and is arranged to be stacked at a lower part of the pre-treatment filter member,
wherein the housing unit comprises a head member which is provided with a first partition wall for preventing the raw water and the residential water from mixing and a second partition wall for preventing the third purified water and the residential water from mixing, and a body member which extends from the head member and in which the filtration unit is disposed therein, and
wherein the filtration unit comprises a first upper cap member in which the pre-treatment filter member disposed on the radial direction outer side and the spiral-wound filter member disposed on the radial direction inner side are disposed at a lower part, and a second upper cap member in which the post-treatment filter member disposed on the radial direction outer side is disposed at a lower part, and the spiral-wound filter member disposed on the radial direction inner side is disposed to penetrate.

15. The water purifier of claim 14, wherein the filtration unit comprises a second lower cap member in which the post-treatment filter member and the spiral-wound filter member are fixedly disposed at an upper part, and a connecting pipe member which is disposed on the radial direction inner side of the spiral-wound filter member to prevent the second purified water and the third purified water from mixing.

16. The water purifier of claim 15, wherein the second lower cap member comprises a pipe support guide which is arranged to extend upward so as to be coupled to the connecting pipe member.

17. The water purifier of claim 16, wherein the spiral-wound filter member comprises a central tube which supports the spiral-wound filter member to be wound in a spiral shape, and in which a second purified water through-hole is formed to allow the second purified water to flow therein, and
wherein the connecting pipe member is disposed to penetrate through the center of the central tube, and is disposed to be spaced apart at a certain distance such that a second purified water flow path through which the second purified water flows is formed between the central tube and the connecting pipe member.

18. The water purifier of claim 15, wherein the second partition wall is arranged to extend in the axial direction along the connecting pipe member.

19. The water purifier of claim 15, wherein the filtration unit comprises a first lower cap member which is arranged to be stacked with the second upper cap member such that the pre-treatment filter member is fixedly disposed at an upper part.

20. The water purifier of claim 15, wherein the filtration unit comprises a fourth lower cap member which supports the second lower cap member to be disposed to be spaced apart from an upper surface, and
wherein the fourth lower cap member comprises a fourth upward support guide which is arranged to extend upward so as to simultaneously surround the second upper cap member and the second lower cap member.
